# EUROPEAN PATENT SPECIFICATION

(11) **EP 4 605 473 B1**
(45) Date of publication and mention of the grant of the patent: **01.04.2026**
(21) Application number: 23805663.4
(22) Date of filing: 18.10.2023
(51) Int. Cl.: C08L 69/00, C08G 64/06, C08G 63/64, C08G 64/16

(54) **POLYCARBONATE COMPOSITION, METHOD FOR THE MANUFACTURE THEREOF, AND ARTICLES COMPRISING THE POLYCARBONATE COMPOSITION**
POLYCARBONATZUSAMMENSETZUNG, VERFAHREN ZU IHRER HERSTELLUNG UND ARTIKEL MIT DER POLYCARBONATZUSAMMENSETZUNG
COMPOSITION DE POLYCARBONATE, SON PROCÉDÉ DE FABRICATION ET ARTICLES COMPRENANT LA COMPOSITION DE POLYCARBONATE

(30) Priority: 18.10.2022 EP 22202291
(43) Date of publication of application: 27.08.2025
(73) Proprietor: SHPP Global Technologies B.V., 4612 PX Bergen op Zoom (NL)
(72) Inventor: VOLLENBERG, Peter, Evansville, Indiana (US); YAO, Huazhen, Shanghai (CN); JIANG, Xiaoming, Shanghai (CN)
(74) Representative: Balder IP Law, S.L.
(86) International application number: PCT/IB2023/060524
(87) International publication number: WO 2024/084413

(56) References cited:
- WO-A2-2008/002734
- US-A1- 2013 118 581

## Description

### CROSS REFERENCE TO RELATED APPLICATION

This application claims priority to and the benefit of European Patent Application No. 22202291.5, filed on October 18, 2022.

### BACKGROUND

The present disclosure relates to polycarbonate compositions having improved optical properties and scratch resistance, methods of manufacture, and articles prepared from the polycarbonate composition.

Polycarbonate (PC) has excellent impact strength and transparency but tends to lack scratch-resistant properties. Efforts to improve scratch resistance include, for example, hard-coating the compositions or inclusion of anti-scratch additives into the compositions. These approaches may not be desirable in all applications. For example, in the case of hard-coating, an expensive additional processing step is introduced to the manufacturing process.

WO2008/002734 A2 discloses a thermoplastic composition comprising 50 wt% poly(50 mol%-(1,1-bis(4-hydroxy-3-methylphenyl)cyclohexane carbonate)-co-(50 mol% bisphenol A carbonate) copolymer (DMBPC-PC), 25 wt% bisphenol A polycarbonate (BPA-PC), 25 wt% poly(40 mol% isophthalate-terephthalate-resorcinol ester)-co-(60 mol% bisphenol A carbonate) copolymer (40:60 ITR-PC), wherein the content of DMBPC-PC in the composition is 25 wt%, and the isophthalate-terephthalate-resorcinol (ITR) ester content in the whole composition is 10 wt%.

Accordingly, there remains a continuing need in the art for scratch-resistant compositions also having good mechanical properties including impact strength and tensile properties, and weatherability. Particularly desired are compositions with good optical clarity.

### SUMMARY

A polycarbonate composition comprises 10 to 60 weight percent, based on the total weight of the composition, of a bisphenol A homopolycarbonate; a polycarbonate comprising repeating units derived from a substituted or unsubstituted cyclohexylidene-bridged bisphenol in an amount effective to provide a substituted or unsubstituted cyclohexylidene-bridged bisphenol content of 25 weight percent or less, based on the total weight of the composition; and a polyester-carbonate comprising ester units derived from isophthalic acid, terephthalic acid, and resorcinol; wherein the composition has a cyclohexylidene-bridged bisphenol:(isophthalic acid, terephthalic acid, and resorcinol ester unit) weight ratio of less than 2.5.

A method of making the polycarbonate composition comprises melt-mixing the components of the composition, and, optionally, extruding the composition.

An article comprises the polycarbonate composition.

The above described and other features are exemplified by the following figures and detailed description.

### BRIEF DESCRIPTION OF THE DRAWINGS

The following figure represents an exemplary embodiment.

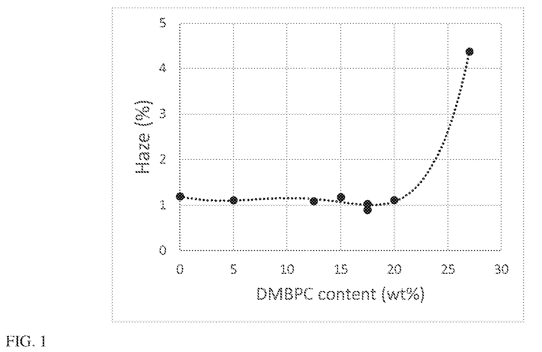

FIG. 1 is a graph of 1,1-bis(4-hydroxy-3-methylphenyl)cyclohexane carbonate (DMBPC) content versus haze of the compositions of the examples.

### DETAILED DESCRIPTION

Accordingly, provided herein is a composition having a combination of good scratch resistance, mechanical properties, and weatherability. In an additional advantageous feature, the composition can exhibit low haze which can facilitate formulation of compositions having particular colors. The composition includes particular amounts of a bisphenol A homopolycarbonate, a polycarbonate including repeating units derived from a substituted or unsubstituted cyclohexylidene-bridged bisphenol, and a polyester-carbonate.

A polycarbonate composition therefore represents an aspect of the present disclosure. The composition comprises a bisphenol A homopolycarbonate. The bisphenol A homopolycarbonate has repeating structural carbonate units of the formula (1). 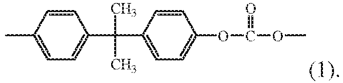 Bisphenol A polycarbonate homopolymers can be manufactured by processes such as interfacial polymerization and melt polymerization, which are known, and are described, for example, in WO 2013/175448 A1 and WO 2014/072923 A1, from bisphenol A ((2,2-bis(4-hydroxyphenyl)propane, or BPA). An endcapping agent can be included during polymerization to provide end groups, for example monocyclic phenols such as phenol, p-cyanophenol, and C₁-₂₂ alkyl-substituted phenols such as p-cumyl-phenol, resorcinol monobenzoate, and p-tertiarybutyl phenol, monoethers of diphenols, such as p-methoxyphenol, monoesters of diphenols such as resorcinol monobenzoate, functionalized chlorides of aliphatic monocarboxylic acids such as acryloyl chloride and methacryloyl chloride, and mono-chloroformates such as phenyl chloroformate, alkyl-substituted phenyl chloroformates, p-cumyl phenyl chloroformate, and toluene chloroformate. Phenol and para-cumylphenol are specifically mentioned. Combinations of different endcapping agents can be used. Branched polycarbonate blocks can be prepared by adding a branching agent during polymerization, for example trimellitic acid, trimellitic anhydride, trimellitic trichloride, tris-p-hydroxyphenylethane, isatin-bis-phenol, tris-phenol TC (1,3,5-tris((p-hydroxyphenyl)isopropyl)benzene), tris-phenol PA (4(4(1,1-bis(p-hydroxyphenyl)-ethyl) alpha, alpha-dimethyl benzyl)phenol), 4-chloroformyl phthalic anhydride, trimesic acid, and benzophenone tetracarboxylic acid. The branching agents can be added at a level of 0.05 to 4.0 weight percent (wt%), for example, 0.05 to 2.0 wt%. Combinations comprising linear polycarbonates and branched polycarbonates can be used.

The bisphenol A polycarbonate homopolymer can be a linear bisphenol A polycarbonate homopolymer, optionally endcapped with phenol or para-cumylphenol, and having a weight average molecular weight of 10,000 to 100,000 grams per mole (g/mol), or 10,000 to 75,000 g/mol, or 18,000 to 40,000 grams per mole, or 20,000 to 40,000 grams per mole, or 20,000 to 38,000 grams per mole, as measured by gel permeation chromatography (GPC), using a crosslinked styrene-divinylbenzene column and calibrated to bisphenol A polycarbonate references. GPC samples are prepared at a concentration of 1 milligram per milliliter (mg/mL) and are eluted at a flow rate of 1.5 ml per minute.

In an aspect, more than one bisphenol A polycarbonate homopolymer can be present. For example, the bisphenol A polycarbonate homopolymer can comprise a first bisphenol A polycarbonate homopolymer having a first weight average molecular weight, and a second bisphenol A polycarbonate homopolymer having a second weight average molecular, wherein the first and second weight average molecular weights are not the same. When present, a weight ratio of a first bisphenol A polycarbonate homopolymer relative to a second bisphenol A polycarbonate homopolymer can be 10:1 to 1:10, or 5:1 to 1: 5, or 3:1 to 1:3, or 2:1 to 1:2.

The bisphenol A homopolycarbonate can be present in the composition in an amount of 10 to 60 weight percent, based on the total weight of the composition. Within this range, the bisphenol A homopolycarbonate can be present in an amount of, for example, 10 to 55 weight percent, or 14 to 60 weight percent, or 14 to 55 weight percent or 15 to 60 weight percent, or 15 to 55 weight percent, or 10 to 50 weight percent, or 12 to 50 weight percent, or 14 to 50 weight percent, or 10 to 45 weight percent, or 12 to 45 weight percent, or 14 to 45 weight percent, each based on the total weight of the composition.

In addition to the bisphenol A homopolycarbonate, the composition comprises a polycarbonate comprising repeating units derived from a substituted or unsubstituted cyclohexylidene-bridged bisphenol. The repeating units derived from a substituted or unsubstituted cyclohexylidene-bridged bisphenol can be according to formula (2) 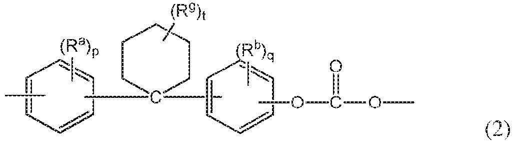 wherein R^{a} and R^{b} are each independently C₁₋₁₂ alkyl; R^{g} is C₁₋₁₂ alkyl; p and q are each independently 0 to 4; and t is 0 to 10. In an aspect, at least one of each of R^{a} and R^{b} are disposed meta to the cyclohexylidene bridging group. In an aspect, R^{a} and R^{b} are each independently C₁₋₄ alkyl, R^{g} is C₁₋₄ alkyl, p and q are each 0 or 1, and t is 0 to 5. In an aspect, R^{a}, R^{b}, and R^{g} are each methyl, p and q are each 0 or 1, and t is 0 or 3, preferably 0. In still another aspect, p and q are each 0, each R^{g} is methyl, and t is 3, such that the cyclohexylidene bridging group is 3,3-dimethyl-5-methyl cyclohexylidene. In another aspect, p and q are each 1, R^{a} and R^{b} are each methyl groups, and t is 0, such that the cyclohexylidene bridging group is an unsubstituted cyclohexylidene. For example, the cyclohexylidene-bridged polycarbonate can comprise repeating units according to formula (3)

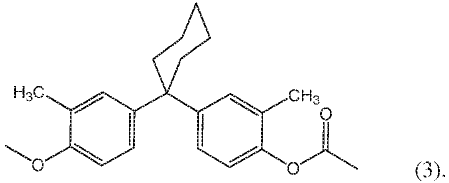

"Polycarbonates" as used herein includes homopolymers (e.g., wherein all repeating units are according to formula (2) or (3)), copolymers comprising repeating units derived from different bisphenols, and copolymers comprising carbonate units according to formula (2) or (3) and other types of polymer units, such as ester units or siloxane units.

In an aspect, the cyclohexylidene-bridged polycarbonate can be a copolycarbonate further comprising repeating units derived from a bisphenol different from the cyclohexylidene-bridged bisphenol. For example, the copolycarbonate can comprise additional repeating units according to formula (4) 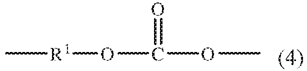 wherein each R¹ contains at least one C₆₋₃₀ aromatic group. For example, each R¹ can be derived from a dihydroxy compound such as an aromatic dihydroxy compound of formula (5) or a bisphenol of formula (6). 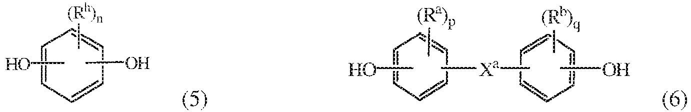 In formula (5), each R^{h} is independently a halogen atom, for example bromine, a C₁₋₁₀ hydrocarbyl group such as a C₁₋₁₀ alkyl, a halogen-substituted C₁₋₁₀ alkyl, a C₆₋₁₀ aryl, or a halogen-substituted C₆₋₁₀ aryl, and n is 0 to 4. In formula (6), R^{a} and R^{b} are each independently a halogen, C₁₋₁₂ alkoxy, or C₁₋₁₂ alkyl, and p and q are each independently integers of 0 to 4, such that when p or q is less than 4, the valence of each carbon of the ring is filled by hydrogen. In an aspect, p and q is each 0, or p and q is each 1, and R^{a} and R^{b} are each a C₁₋₃ alkyl group, preferably methyl, disposed meta to the hydroxy group on each arylene group. X^{a} is a bridging group connecting the two hydroxy-substituted aromatic groups, where the bridging group and the hydroxy substituent of each C₆ arylene group are disposed ortho, meta, or para (preferably para) to each other on the C₆ arylene group, for example, a single bond, -O-, -S-, -S(O)-, -S(O)₂-, --C(O)-, or a C₁₋₁₈ organic group, which can be cyclic or acyclic, aromatic or non-aromatic, and can further comprise heteroatoms such as halogens, oxygen, nitrogen, sulfur, silicon, or phosphorous. For example, X^{a} can be a substituted or unsubstituted C₃₋₁₈ cycloalkylidene; a C₁₋₂₅ alkylidene of the formula -C(R^{c})(R^{d}) - wherein R^{c} and R^{d} are each independently hydrogen, C₁₋₁₂ alkyl, C₁₋₁₂ cycloalkyl, C₇₋₁₂ arylalkyl, C₁₋₁₂ heteroalkyl, or cyclic C₇₋₁₂ heteroarylalkyl; or a group of the formula -C(=R^{e})- wherein R^{e} is a divalent C₁₋₁₂ hydrocarbon group.

Examples of bisphenol compounds include 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis (hydroxyphenyl)cyclopentane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantane, alpha,alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-lnydroxyplnenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(-4-hydroxyphenyl)fluorene, 2,7-dihydroxypyrene, 6,6'-dihydroxy-3,3,3',3'- tetramethylspiro(bis)indane ("spirobiindane bisphenol"), 3,3-bis(4-hydroxyphenyl)phthalimide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole; resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6--tetrafluoro hydroquinone, 2,3,5,6-tetrabromo hydroquinone, or the like.

Specific dihydroxy compounds include resorcinol, 2,2-bis(4-hydroxyphenyl) propane ("bisphenol A" or "BPA"), 3,3-bis(4-hydroxyphenyl) phthalimidine, 2-phenyl-3,3'-bis(4-hydroxyphenyl) phthalimidine (also known as N-phenyl phenolphthalein bisphenol, "PPPBP", or 3,3-bis(4-hydroxyphenyl)-2-phenylisoindolin-1-one), and 1,1-bis(4-hydroxyphenyl)-3,3,5-trimethylcyclohexane (isophorone bisphenol).

In an aspect, the polycarbonate comprising repeating units derived from a substituted or unsubstituted cyclohexylidene-bridged bisphenol comprises a first carbonate repeat unit having the structure 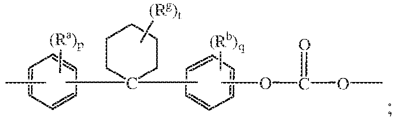 and a second carbonate repeat unit having the structure 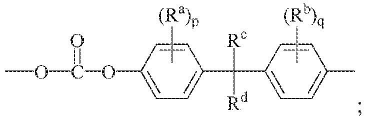 wherein in the foregoing formulas, R^{a}, R^{b}, and R^{g} are each independently a C₁₋₁₂ alkyl group, R^{c} and R^{d} are each independently hydrogen, a C₁₋₁₂ alkyl, a cyclic C₁₋₁₂ alkyl, a C₇₋₁₂ arylalkyl, a C₁₋₁₂ heteroalkyl, or a cyclic C₇₋₁₂ heteroarylalkyl; p and q are each independently 0 to 4, and t is 0 to 10.

In an aspect, the cyclohexylidene-bridged polycarbonate is a copolycarbonate further comprising repeating units derived from bisphenol A. For example, the first polycarbonate can comprise repeating units of formula (2) and (4a)

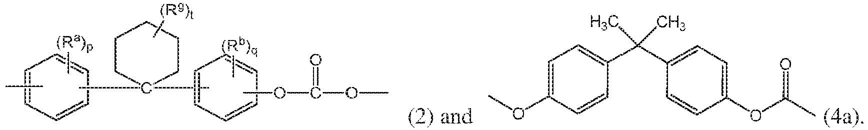

In an aspect, the polycarbonate comprising repeating units derived from a substituted or unsubstituted cyclohexylidene-bridged bisphenol can be of the structure 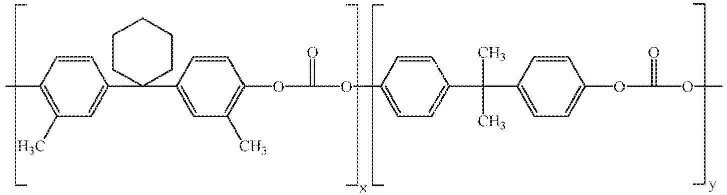 wherein a molar ratio of x to y is 25:75 to 75:25.

The cyclohexylidene-bridged polycarbonate comprises the repeating units derived from a substituted or unsubstituted cyclohexylidene-bridged bisphenol in an amount effective to provide a substituted or unsubstituted cyclohexylidene-bridged bisphenol content of 25 weight percent or less, or 22 weight percent or less, or greater than 0 to 25 weight percent, or greater than 0 to 22 weight percent, or 1 to 25 weight percent, or 1 to 22 weight percent, or 5 to 25 weight percent, or 5 to 22 weight percent, each based on the total weight of the composition.

In an aspect, the polycarbonate comprising repeating units derived from a substituted or unsubstituted cyclohexylidene-bridged bisphenol can have a substituted or unsubstituted cyclohexylidene-bridged bisphenol content of 40 to 60 weight percent, or 45 to 55 weight percent, or 47 to 53 weight percent, each based on the total weight of the polycarbonate comprising repeating units derived from a substituted or unsubstituted cyclohexylidene-bridged bisphenol.

The polycarbonate comprising repeating units derived from a substituted or unsubstituted cyclohexylidene-bridged bisphenol can be present in the composition in an amount of, for example 5 to 45 weight percent, based on the total weight of the composition, provided that the polycarbonate comprising repeating units derived from a substituted or unsubstituted cyclohexylidene-bridged bisphenol is present in an amount sufficient to provide the substituted or unsubstituted cyclohexylidene-bridged bisphenol content of 25 weight percent or less. Within this range, the polycarbonate comprising repeating units derived from a substituted or unsubstituted cyclohexylidene-bridged bisphenol can be present in an amount of 7 to 43 weight percent, or 10 to 40 weight percent, each based on the total weight of the composition.

The composition further comprises a polyester-carbonate. The polyester-carbonate comprises repeating units derived from isophthalic acid, terephthalic acid, and resorcinol. For example, the polycarbonate-ester can comprise repeating units according to formula (7) 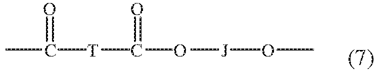 wherein J is a divalent group derived from an aromatic dihydroxy compound of formula (5), e.g., resorcinol, or a bisphenol of formula (6), e.g., bisphenol A; and T is a divalent group derived from a dicarboxylic acid comprising terephthalic acid and isophthalic acid. A specific dicarboxylic acid comprises a combination of isophthalic acid and terephthalic acid wherein the weight ratio of isophthalic acid to terephthalic acid is 91:9 to 2:98.

The molar ratio of ester units to carbonate units in the polyester-carbonate can vary broadly, for example 1:99 to 99:1, preferably 10:90 to 90:10, more preferably 25:75 to 75:25, or 2:98 to 15:85, depending on the desired properties of the final composition.

In an aspect, the polyester-carbonate is of the formula 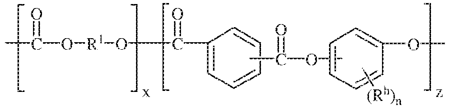 wherein R¹ is derived from an aromatic dihydroxy compound of the formula 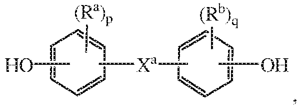 wherein R^{a} and R^{b} are each independently a halogen, C₁₋₁₂ alkoxy, or C₁₋₁₂ alkyl, p and q are each independently integers of 0 to 4, and X^{a} is single bond, -O-, -S-, -S(O)-, -S(O)₂-, -C(O)-, or a C₁₋₆₀ organic group; and R^{h} is independently at each occurrence a halogen atom, a C₁₋₁₀ alkyl group, a halogen-substituted C₁₋₁₀ alkyl group, a C₆₋₁₀ aryl group, or a halogen-substituted C₆₋₁₀ aryl group, and n is 0 to 4.

In an aspect, the polyester-carbonate comprises aromatic ester units and monoarylate ester units derived from the reaction of a combination of isophthalic and terephthalic diacids (or a reactive derivative thereof) with resorcinol (or a reactive derivative thereof) to provide isophthalate/terephthalate-resorcinol ("ITR" ester units). The ITR ester units can be present in the polyester-carbonate in an amount greater than or equal to 95 mol%, preferably greater than or equal to 99 mol%, and still more preferably greater than or equal to 99.5 mol%, based on the total moles of ester units in the polycarbonate. A preferred polyester-carbonate comprises bisphenol A carbonate units, and ITR ester units derived from terephthalic acid, isophthalic acid, and resorcinol, i.e., a poly(bisphenol A carbonate-co-isophthalate/terephthalate-resorcinol ester) of formula (8) 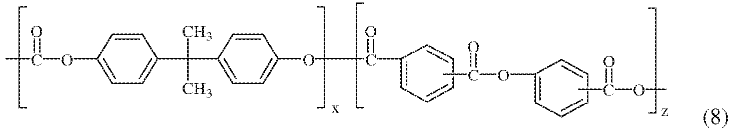 wherein the mole ratio of x:z is from 98:2 to 2:98, or from 90:10 to 10:90. In an aspect the mole ratio of x:z is from 50:50 to 99:1, or from 1:99 to 50:50. The ITR ester units can be present in the poly(bisphenol A carbonate-co-isophthalate-terephthalate-resorcinol ester) in an amount greater than or equal to 95 mol%, preferably greater than or equal to 99 mol%, and still more preferably greater than or equal to 99.5 mol%, based on the total moles of ester units in the copolymer. Other carbonate units, other ester units, or a combination thereof can be present, in a total amount of 1 to 20 mole%, based on the total moles of units in the copolymers, for example monoaryl carbonate units of formula (9) and bisphenol ester units of formula (10): 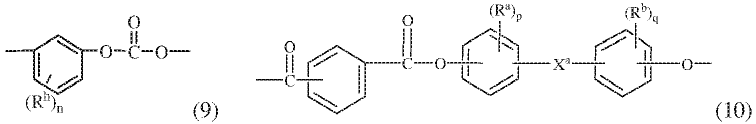 wherein, in the foregoing formulae, R^{h} is each independently a C₁₋₁₀ hydrocarbon group, n is 0-4, R^{a} and R^{b} are each independently a C₁₋₁₂ alkyl, p and q are each independently integers of 0-4, and X^{a} is a single bond, -O-, -S-, -S(O)-, -S(O)₂-, -C(O)-, or a C₁₋₁₃ alkylidene of formula - C(R^{c})(R^{d}) - wherein R^{c} and R^{d} are each independently hydrogen or C₁₋₁₂ alkyl, or a group of the formula -C(=R^{e})- wherein R^{e} is a divalent C₁₋₁₂ hydrocarbon group. The bisphenol ester units can be bisphenol A phthalate ester units of the formula (10a)

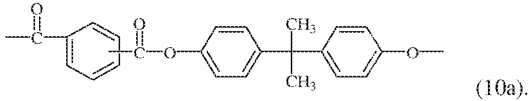

In an aspect, the poly(bisphenol A carbonate-co-isophthalate/terephthalate-resorcinol ester) comprises 1-90 mol% of bisphenol A carbonate units, 10-99 mol% of isophthalic acid-terephthalic acid-resorcinol ester units, and optionally 1-60 mol% of resorcinol carbonate units, isophthalic acid-terephthalic acid-bisphenol A phthalate ester units, or a combination thereof. In another aspect, poly(bisphenol A carbonate-co-isophthalate/terephthalate resorcinol ester) comprises 10-20 mol% of bisphenol A carbonate units, 20-98 mol% of isophthalic acid-terephthalic acid-resorcinol ester units, and optionally 1-60 mol% of resorcinol carbonate units, isophthalic acid-terephthalic acid-bisphenol A phthalate ester units, or a combination thereof. In an aspect, the ester units derived from isophthalic acid, terephthalic acid, and resorcinol are present in the polyester--carbonate in an amount of 10 to 30 weight percent, based on the total weight of the polyester-carbonate.

The polyester-carbonate can have an Mw of 2,000-100,000 g/mol, preferably 3,000-75,000 g/mol, more preferably 4,000-50,000 g/mol, more preferably 5,000-35,000 g/mol, and still more preferably 25,000-35,000 g/mol. Molecular weight determinations are performed using gel permeation chromatography (GPC) using a cross linked styrene-divinyl benzene column, at a sample concentration of 1 milligram per milliliter, and as calibrated with bisphenol A homopolycarbonate standards. Samples are eluted at a flow rate of 1.0 ml/min with methylene chloride.

The polyester-carbonate can be present in the composition in an amount to provide a weight ratio of cyclohexylidene-bridged bisphenol:(isophthalic acid, terephthalic acid, and resorcinol ester unit) of less than 2.5, or less than 2.25. The ratio of cyclohexylidene-bridged bisphenol:(isophthalic acid, terephthalic acid, and resorcinol ester unit) is greater than 0, and can be, for example, 0.1 to less than 2.5, or 0.1 to less than 2.25, or 0.3 to less than 2.5, or 0.3 to less than 2.25, or 0.5 to less than 2.5, or 0.5 to less than 2.25. For example, the polyester-carbonate may be present in the composition in an amount of 35 to 55 weight percent, based on the total weight of the composition, provided that the weight ratio of cyclohexylidene-bridged bisphenol:(isophthalic acid, terephthalic acid, and resorcinol ester unit) is within the aforementioned limit. Within this range, the polyester-carbonate can be present in an amount of 37 to 53 weight percent, or 40 to 50 weight percent, or 42 to 48 weight percent, each based on the total weight of the composition.

In an aspect, the polycarbonate composition can comprise 15 to 55 weight percent of the bisphenol A homopolycarbonate; 35 to 55 weight percent of the polyester-carbonate; and 5 to 45 weight percent of the polycarbonate comprising repeating units derived from a substituted or unsubstituted cyclohexylidene-bridged bisphenol. The composition can have a cyclohexylidene-bridged bisphenol content of 22 weight percent or less. The cyclohexylidene-bridged bisphenol:(isophthalic acid, terephthalic acid, and resorcinol ester unit) weight ratio can be less than 2.25.

The thermoplastic composition can optionally further comprise an additive composition. The additive composition can comprise one or more additives selected to achieve a desired property, with the proviso that the additive(s) are also selected so as to not significantly adversely affect a desired property of the thermoplastic composition. The additive composition or individual additives can be mixed at a suitable time during the mixing of the components for forming the composition. The additive can be soluble or non-soluble in polycarbonate. The additive composition can include a flow modifier, filler (e.g., a particulate polytetrafluoroethylene (PTFE), glass, carbon, mineral, or metal), reinforcing agent (e.g., glass fibers), antioxidant, heat stabilizer, light stabilizer, ultraviolet (UV) light stabilizer, UV absorbing additive, plasticizer, lubricant, release agent (such as a mold release agent), antistatic agent, anti-fog agent, antimicrobial agent, colorant (e.g., a dye or pigment), surface effect additive, radiation stabilizer, flame retardant, anti-drip agent (e.g., a PTFE-encapsulated styreneacrylonitrile copolymer (TSAN)), or a combination thereof. For example, a combination of a heat stabilizer, mold release agent, and ultraviolet light stabilizer can be used. The additives can be used in amounts generally known to be effective. For example, the total amount of the additive composition (other than any impact modifier, filler, or reinforcing agent) can be 0.1 to 10 weight percent, based on the total weight of the composition.

In an aspect, the composition can include a heat stabilizer additive. Heat stabilizer additives include organophosphites (e.g., triphenyl phosphite, tris-(2,6-dimethylphenyl)phosphite, tris-(mixed mono-and di-nonylphenyl)phosphite or the like), phosphonates (e.g., dimethylbenzene phosphonate or the like), phosphates (e.g., trimethyl phosphate, or the like), or a combination thereof. The heat stabilizer can be tris(2,4-di-t-butylphenyl) phosphate available as IRGAPHOS^{™} 168. Heat stabilizers are generally used in amounts of 0.01 to 5 wt%, based on the total weight of the composition.

There is considerable overlap among plasticizers, lubricants, and mold release agents, which include, for example, phthalic acid esters (e.g., octyl-4,5-epoxy-hexahydrophthalate), tris-(octoxycarbonylethyl)isocyanurate, di- or polyfunctional aromatic phosphates (e.g., resorcinol tetraphenyl diphosphate (RDP), the bis(diphenyl) phosphate of hydroquinone and the bis(diphenyl) phosphate of bisphenol A); poly-alpha-olefins; epoxidized soybean oil; silicones, including silicone oils (e.g., poly(dimethyl diphenyl siloxanes); fatty acid esters (e.g., C₁₋₃₂ alkyl stearyl esters, such as methyl stearate and stearyl stearate and esters of stearic acid such as pentaerythritol tetrastearate, glycerol tristearate (GTS), and the like), waxes (e.g., beeswax, montan wax, paraffin wax, or the like), or a combination thereof. These are generally used in amounts of 0.01 to 5 wt%, based on the total weight of the composition.

Light stabilizers or ultraviolet light (UV) absorbing additives, also referred to as UV stabilizers, can also be used. Light stabilizer additives include benzotriazoles such as 2-(2-hydroxy-5-methylphenyl)benzotriazole, 2-(2-hydroxy-5-tert-octylphenyl)-benzotriazole and 2-hydroxy-4-n-octoxy benzophenone, or the like, or a combination thereof.

UV absorbing additives include hydroxybenzophenones; hydroxybenzotriazoles; hydroxybenzotriazines; cyanoacrylates; oxanilides; benzoxazinones; aryl salicylates; monoesters of diphenols such as resorcinol monobenzoate; 2-(2H-benzotriazol-2-yl)-4-(1,1,3,3-tetramethylbutyl)-phenol (CYASORB^{™} 5411); 2-hydroxy-4-n-octyloxybenzophenone (CYASORB^{™} 531); 2-[4,6-bis(2,4-dimethylphenyl)-1,3,5-triazin-2-yl]- 5-(octyloxy)-phenol (CYASORB^{™} 1164); 2,2'-(1,4- phenylene)bis(4H-3,1-benzoxazin-4-one) (CYASORB^{™} UV-3638); poly[(6-morphilino-s-triazine-2,4-diyl)[2,2,6,6-tetramethyl-4-piperidyl) imino]-hexamethylene[(2,2,6,6-tetramethyl-4-piperidyl)iminol, 2-hydroxy-4-octyloxybenzophenone (UVINUL^{™}3008), 6-tert-butyl-2-(5-chloro-2H-benzotriazole-2-yl)-4-methylphenyl (UVINUL^{™}3026), 2,4-di-tert-butyl-6-(5-chloro-2H-benzotriazole-2-yl)-phenol (UVINUL^{™}3027), 2-(2H-benzotriazole-2-yl)-4,6-di-tert-pentylphenol (UVINUL^{™}3028), 2-(2H-benzotriazole-2-yl)-4-(1,1,3,3-tetramethylbutyl)-phenol (UVINUL^{™}3029), 1,3-bis[(2'cyano-3',3'-diphenylacryloyl)oxy]-2,2-bis-{[(2'-cyano-3',3'-diphenylacryloyl)oxy]methyl }-propane (UVINUL^{™}3030), 2-(2H-benzotriazole-2-yl)-4-methylphenol (UVINUL^{™}3033), 2-(2H-benzotriazole-2-yl)-4,6-bis(1-methyl-1-phenyethyl)phenol (UVINUL^{™}3034), ethyl-2-cyano-3,3-diphenylacrylate (UVINUL^{™}3035), (2-ethylhexyl)-2-cyano-3,3-diphenylacrylate (UVINUL^{™}3039), N,N'-bisformyl-N,N'-bis(2,2,6,6-tetramethyl-4-piperidinyl)hexamethylendiamine (UVINUL4050H), bis-(2,2,6,6-tetramethyl-4-piperidyl)-sebacate (UVINUL^{™}4077H), bis-(1,2,2,6,6-pentamethyl-4-piperdiyl)-sebacate + methyl-(1,2,2,6,6-pentamethyl-4-piperidyl)-sebacate (UVINUL^{™}4092H) 1,3-bis[(2-cyano-3,3-diphenylacryloyl)oxy]-2,2-bis[[(2-cyano-3, 3-diphenylacryloyl)oxy]methyl]propane (UVINUL^{™} 3030); 2,2'-(1,4-phenylene) bis(4H-3,1-benzoxazin-4-one); 1,3-bis[(2-cyano-3,3-diphenylacryloyl)oxy] -2,2-bis[[(2-cyano-3,3-diphenylacryloyl)oxy]methyl]propane; TINUVIN^{™} 234; nano-size inorganic materials such as titanium oxide, cerium oxide, and zinc oxide, all with particle size less than or equal to 100 nanometers; or the like, or a combination thereof. UV absorbers can be used in amounts of 0.01 to 1 part by weight, based on 100 parts by weight of polycarbonate and impact modifier. UV absorbers that can be particularly useful with the polycarbonate compositions disclosed herein include 2-(2H-benzotriazol-2-yl)-4-(1,1,3,3-tetramethylbutyl)-phenol (e.g., CYASORB^{™} 5411 commercially available from Cytec Industries, Inc., Woodland Park, New Jersey) and 2,2'-(1,4- phenylene)bis(4H-3,1-benzoxazin-4-one) (e.g., CYASORB^{™} UV- 3638, commercially available from Cytec Industries, Inc., Woodland Park, New Jersey), or a combination thereof. The UV stabilizers can be present in an amount of 0.01 to 1 wt%, preferably, 0.1 to 0.5 wt%, and more preferably, 0.15 to 0.4 wt%, based upon the total weight of the polycarbonate composition.

Possible fillers or reinforcing agents include, for example, mica, clay, feldspar, quartz, quartzite, perlite, tripoli, diatomaceous earth, aluminum silicate (mullite), synthetic calcium silicate, fused silica, fumed silica, sand, boron-nitride powder, boron-silicate powder, calcium sulfate, calcium carbonates (such as chalk, limestone, marble, and synthetic precipitated calcium carbonates) talc (including fibrous, modular, needle shaped, and lamellar talc), wollastonite, hollow or solid glass spheres, silicate spheres, cenospheres, aluminosilicate or (armospheres), kaolin, whiskers of silicon carbide, alumina, boron carbide, iron, nickel, or copper, continuous and chopped carbon fibers or glass fibers, molybdenum sulfide, zinc sulfide, barium titanate, barium ferrite, barium sulfate, heavy spar, TiO₂, aluminum oxide, magnesium oxide, particulate or fibrous aluminum, bronze, zinc, copper, or nickel, glass flakes, flaked silicon carbide, flaked aluminum diboride, flaked aluminum, steel flakes, natural fillers such as wood flour, fibrous cellulose, cotton, sisal, jute, starch , lignin, ground nut shells, or rice grain husks, reinforcing organic fibrous fillers such as poly(ether ketone), polyimide, polybenzoxazole, polyphenylene sulfide), polyesters, polyethylene, aromatic polyamides, aromatic polyimides, polyetherimides, polytetrafluoroethylene, and poly(vinyl alcohol), as well a combination thereof. The fillers and reinforcing agents can be coated with a layer of metallic material to facilitate conductivity, or surface treated with silanes to improve adhesion and dispersion with the polymer matrix. Fillers are used in amounts of 1 to 200 parts by weight, based on 100 parts by weight of the total composition. In an aspect, no filler is present in the composition.

Colorants such as pigment or dye additives can also be present. Useful pigments can include, for example, inorganic pigments such as metal oxides and mixed metal oxides such as zinc oxide, titanium dioxides, iron oxides, or the like; sulfides such as zinc sulfides, or the like; aluminates; sodium sulfo-silicates sulfates, chromates, or the like; carbon blacks; zinc ferrites; ultramarine blue; organic pigments such as azos, di-azos, quinacridones, perylenes, naphthalene tetracarboxylic acids, flavanthrones, isoindolinones, tetrachloroisoindolinones, anthraquinones, enthrones, dioxazines, phthalocyanines, and azo lakes; Pigment Red 101, Pigment Red 122, Pigment Red 149, Pigment Red 177, Pigment Red 179, Pigment Red 202, Pigment Violet 29, Pigment Blue 15, Pigment Blue 60, Pigment Green 7, Pigment Yellow 119, Pigment Yellow 147, Pigment Yellow 150, Pigment Brown 24, Pigment Blue 29, or a combination thereof.

Dyes are generally organic materials and include coumarin dyes such as coumarin 460 (blue), coumarin 6 (green), nile red or the like; lanthanide complexes; hydrocarbon and substituted hydrocarbon dyes; polycyclic aromatic hydrocarbon dyes; scintillation dyes such as oxazole or oxadiazole dyes; aryl- or heteroaryl-substituted poly (C₂₋₈) olefin dyes; carbocyanine dyes; indanthrone dyes; phthalocyanine dyes; oxazine dyes; carbostyryl dyes; napthalenetetracarboxylic acid dyes; porphyrin dyes; bis(styryl)biphenyl dyes; acridine dyes; anthraquinone dyes; cyanine dyes; methine dyes; arylmethane dyes; azo dyes; indigoid dyes, thioindigoid dyes, diazonium dyes; nitro dyes; quinone imine dyes; aminoketone dyes; tetrazolium dyes; thiazole dyes; perylene dyes, perinone dyes; bis-benzoxazolylthiophene (BBOT); triarylmethane dyes; xanthene dyes; thioxanthene dyes; naphthalimide dyes; lactone dyes; pyrazolone dyes; fluorophores such as anti-stokes shift dyes which absorb in the near infrared wavelength and emit in the visible wavelength, or the like; luminescent dyes such as 7-amino-4-methylcoumarin; 3-(2'-benzothiazolyl)-7-diethylaminocoumarin; 2-(4-biphenylyl)-5-(4-t-butylphenyl)-1,3,4-oxadiazole; 2,5-bis-(4-biphenylyl)-oxazole; 2,2'-dimethyl-p-quaterphenyl; 2,2-dimethyl-p-terphenyl; 3,5,3ʺʺ,5ʺʺ-tetra-t-butyl-p-quinquephenyl; 2,5-diphenylfuran; 2,5-diphenyloxazole; 4,4'-diphenylstilbene; 4-dicyanomethylene-2-methyl-6-(p-dimethylaminostyryl)-4H-pyran; 1,1'-diethyl-2,2'-carbocyanine iodide; 3,3'-diethyl-4,4',5,5'-dibenzothiatricarbocyanine iodide; 7-dimethylamino-1-methyl-4-methoxy-8-azaquinolone-2; 7-dimethylamino-4-methylquinolone-2; 2-(4-(4-dimethylaminophenyl)-1,3-butadienyl)-3-ethylbenzothiazolium perchlorate; 3-diethylamino-7-diethyliminophenoxazonium perchlorate; 2-(1-naphthyl)-5-phenyloxazole; 2,2'-p-phenylen-bis(5-phenyloxazole); rhodamine 700; rhodamine 800; pyrene, chrysene, rubrene, coronene, or the like; or a combination thereof.

In an aspect, the polycarbonate composition can comprise a colorant composition which can include, for example, those known under their Color Index numbers as solvent green 3, solvent green 28, solvent red 52, solvent red 111, solvent red 135, solvent red 169, solvent red 179, solvent red 207, disperse red 22, vat red 41, solvent orange 60, solvent orange 63, solvent violet 13, solvent violet 14, solvent violet 50, amino ketone black, solvent black 7, nigrosine dyes, disperse blue 73, solvent blue 97, solvent blue 101, solvent blue 104, solvent blue 138, disperse yellow 160, solvent yellow 84, solvent yellow 93, solvent yellow 98, solvent yellow 163, solvent yellow 160:1, and mixtures comprising at least one of the foregoing colorants. Preferred colorants can include solvent red 207, disperse orange 47, solvent green 3, and mixtures comprising at least one of the foregoing colorants.

Colorants can be employed in amounts and combinations sufficient to render the molded article dark and opaque, and more specifically to provide the lightness values described below. The specific amount of a colorant employed can depend on, among other factors, its solubility and extinction coefficient in the polycarbonate composition, and whether it is being employed in combination with one or more additional colorants. Suitable amounts and combinations can readily be determined by those of ordinary skill in the art guided by the present disclosure. Typical colorant amounts can be, for example, 0.1 to 1 weight percent, based on the total weight of the composition, for example 0.5 to 1 weight percent, based on the total weight of the composition.

In an aspect, when present, the colorant composition can provide the polycarbonate composition having a black color, for example piano black or jet black.

In an aspect, the composition can comprise a flame retardant. Useful flame retardants can include organic compounds that include phosphorus, bromine, or chlorine. Non-brominated and non-chlorinated phosphorus-containing flame retardants can be preferred in certain applications for regulatory reasons, for example organic phosphates and organic compounds containing phosphorus-nitrogen bonds.

Flame retardant aromatic phosphates include triphenyl phosphate, tricresyl phosphate, isopropylated triphenyl phosphate, phenyl bis(dodecyl) phosphate, phenyl bis(neopentyl) phosphate, phenyl bis(3,5,5'-trimethylhexyl) phosphate, ethyl diphenyl phosphate, 2-ethylhexyl di(p-tolyl) phosphate, bis(2-ethylhexyl) p-tolyl phosphate, tritolyl phosphate, bis(2-ethylhexyl) phenyl phosphate, tri(nonylphenyl) phosphate, bis(dodecyl) p-tolyl phosphate, dibutyl phenyl phosphate, 2-chloroethyl diphenyl phosphate, p-tolyl bis(2,5,5'-trimethylhexyl) phosphate, and 2-ethylhexyl diphenyl phosphate. Di- or polyfunctional aromatic phosphorus-containing compounds are also useful, for example resorcinol tetraphenyl diphosphate (RDP), the bis(diphenyl) phosphate of hydroquinone and the bis(diphenyl) phosphate of bisphenol A, respectively, and their oligomeric and polymeric counterparts.

Flame retardant compounds containing phosphorus-nitrogen bonds include phosphazenes, phosphonitrilic chloride, phosphorus ester amides, phosphoric acid amides, phosphonic acid amides, phosphinic acid amides, and tris(aziridinyl) phosphine oxide. These flame-retardant additives are commercially available. In an aspect, the organophosphorus flame retardant containing a phosphorus-nitrogen bond is a phosphazene or cyclic phosphazene of the formulas 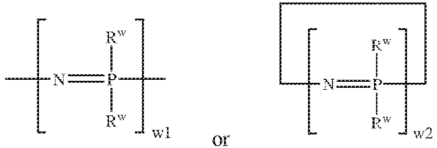 wherein w1 is 3 to 10,000; w2 is 3 to 2.5, or 3 to 7; and each R^{w} is independently a C₁₋₁₂ alkyl, alkenyl, alkoxy, aryl, aryloxy, or polyoxyalkylene group. In the foregoing groups at least one hydrogen atom of these groups can be substituted with a group having an N, S, O, or F atom, or an amino group. For example, each R^{w} can be a substituted or unsubstituted phenoxy, an amino, or a polyoxyalkylene group. Any given R^{w} can further be a crosslink to another phosphazene group. Exemplary crosslinks include bisphenol groups, for example bisphenol A groups. Examples include phenoxy cyclotriphosphazene, octaphenoxy cyclotetraphosphazene decaphenoxy cyclopentaphosphazene, and the like. In an aspect, the phosphazene has a structure represented by the formula

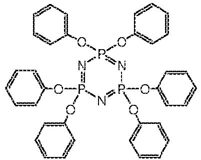

Commercially available phenoxyphosphazenes having the aforementioned structures are LY202. manufactured and distributed by Lanyin Chemical Co., Ltd, FP-110 manufactured and distributed by Fushimi Pharmaceutical Co., Ltd, and SPB-100 manufactured and distributed by Otsuka Chemical Co., Ltd.

Halogenated materials can also be used as flame retardants, for example bisphenols of which the following are representative: 2,2-bis-(3,5-dichlorophenyl)-propane; bis-(2-chlorophenyl)-methane; bis(2,6-dibromophenyl)-methane; 1,1-bis-(4-iodophenyl)-ethane; 1,2-bis-(2,6-dichlorophenyl)-ethane; 1,1-bis-(2-chloro-4-iodophenyl)ethane; 1,1-bis-(2-chloro-4-methylphenyl)-ethane; 1,1-bis-(3,5-dichlorophenyl)-ethane; 2,2--bis-(3--phenyl-4-bromophenyl)-ethane; 2,6-bis-(4,6-dichloronaphthyl)-propane; and 2,2-bis-(3,5-dichloro-4-hydroxyphenyl)-propane 2,2 bis-(3-bromo-4-hydroxyphenyl)-propane. Other halogenated materials include 1,3-dichlorobenzene, 1,4-dibromobenzene, 1,3-dichloro-4-hydroxybenzene, and biphenyls such as 2,2'-dichlorobiphenyl, polybrominated 1,4-diphenoxybenzene, 2,4'-dibromobiphenyl, and 2,4'-dichlorobiphenyl as well as decabromo diphenyl oxide, as well as oligomeric and polymeric halogenated aromatic compounds, such as a copolycarbonate of bisphenol A and tetrabromobisphenol A and a carbonate precursor, e.g., phosgene. Metal synergists, e.g., antimony oxide, can also be used with the flame retardant.

Alternatively, the thermoplastic composition can be essentially free of chlorine and bromine. "Essentially free of chlorine and bromine" is defined as having a bromine or chlorine content of less than or equal to 100 parts per million by weight (ppm), less than or equal to 75 ppm, or less than or equal to 50 ppm, based on the total parts by weight of the composition.

Inorganic flame retardants can also be used, for example salts of C₁₋₁₆ alkyl sulfonate salts such as potassium perfluorobutane sulfonate (Rimar salt), potassium perfluoroctane sulfonate, tetraethylammonium perfluorohexane sulfonate, and potassium diphenylsulfone sulfonate, salts such as Na₂CO₃, K₂CO₃, MgCO₃, CaCO₃, and BaCO₃, or fluoro-anion complexes such as Li₃AlF₆, BaSiF₆, KBF₄, K₃AlF₆, KAlF₄, K₂SiF₆, or Na₃AlF₆.

When present, the flame retardant can be included in the composition in an amount of 0.01 to 10 weight percent. Within this range, the flame retardant can be present in an amount of 0.1 to 10 weight percent, or 1 to 10 weight percent, or 1 to 8 weight percent, or 2 to 6 weight percent, or 3 to 5 weight percent, each based on the total weight of the composition.

The polycarbonate composition can optionally exclude other components not specifically described herein. For example, the polycarbonate composition can exclude thermoplastic polymers other than the bisphenol A homopolycarbonate, the polycarbonate comprising repeating units derived from a substituted or unsubstituted cyclohexylidene-bridged bisphenol, and the polyester-carbonate. For example the composition can minimize or exclude polyesters (e.g., a polyester can be present in an amount of 1 weight percent or less, preferably wherein a polyester is excluded from the composition). The composition can optionally exclude a polycarbonate other than the bisphenol A homopolycarbonate, the polycarbonate comprising repeating units derived from a substituted or unsubstituted cyclohexylidene-bridged bisphenol, and the polyester--carbonate, for example a polycarbonate-siloxane copolymer. The polycarbonate composition can optionally exclude impact modifiers, for example silicone-based impact modifiers, methyl methacrylate-butadiene-styrene copolymers, acrylonitrile-butadiene, styrene copolymers, and the like, or a combination thereof. The composition can exclude halogenated flame retardants, for example brominated flame retardants, including brominated polycarbonate (e.g., a polycarbonate containing brominated carbonate includes units derived from 2,2',6,6'-tetrabromo-4,4'-isopropylidenediphenol (TBBPA) and carbonate units derived from at least one dihydroxy aromatic compound that is not TBBPA), brominated epoxies, and the like or combinations thereof. The composition can optionally exclude a phosphorous-containing flame retardant.

The composition can advantageously exhibit one or more desirable properties. For example, it was found that improved scratch resistance can unexpectedly be obtained by combining particular amounts of a bisphenol A homopolymer, a polycarbonate comprising repeating units derived from a substituted or unsubstituted cyclohexylidene-bridged bisphenol, and a polyester-carbonate. The composition can further exhibit good optical properties.

In an aspect, a molded sample of the composition can exhibit a haze of less than 2.5, or less than 2, or less than 1.5, as determined using a 2.5 mm thick plaque according to ASTM-D1003-00.

In an aspect, a molded sample of the composition can exhibit a scratch onset of visibility of less than 20 Newtons (N), or less than 18 N. Scratch resistance can be determined in accordance with ASTM D7027-13/ISO 19252:08, according to the procedure further described in the working examples.

The polycarbonate composition can further exhibit good color. For example, the polycarbonate composition can have an L* value of 20 to 35, or 25 to 35, or 25 to 30; an a* value of 0.1 to 0.3, or 0.1 to 0.2, or 0.15 to 0.2; and a b* value of -1.5 to -0.5, or -1.1 to -0.5, or - 1.1 to -0.74, as measured according to ASTM E 308-08 by the CIE Lab method with a 10 degree observer, D65 illuminant, specular component excluded, and measured in reflectance mode, and using a sample having a thickness of 3.2 millimeters.

The composition can also exhibit a desirable combination of mechanical properties. For example, a molded sample of the composition can exhibit a notched Izod impact strength of greater than 40 J/m as measured in accordance with ASTM D256 under a load of 5 lbf at a temperature of 23°C. A molded sample of the composition can exhibit a tensile strength at break of greater than 60 MPa and a tensile elongation at break of greater than 100%, as determined according to ASTM D638 at a rate of 50 mm/min using a Type I bar.

The polycarbonate composition of the present disclosure can be manufactured according to various methods. For example, the bisphenol A homopolymer, the polycarbonate comprising repeating units derived from a substituted or unsubstituted cyclohexylidene-bridged bisphenol, and the polyester-carbonate and other optional components can be first blended, optionally with any fillers, in a high-speed mixer or by hand-mixing. The blend can then be fed into the throat of a twin-screw extruder via a hopper. Alternatively, at least one of the components can be incorporated into the composition by feeding it directly into the extruder at the through and/or downstream through a side stuffer, or by being compounded into a masterbatch with a desired polymer and fed into the extruder. The extruder is generally operated at a temperature higher than that necessary to cause the composition to flow. The extrudate can be immediately quenched in a water bath and pelletized. The pellets so prepared can be one-fourth inch long or less as desired. Such pellets can be used for subsequent molding, shaping, or forming.

Shaped, formed, casted, or molded articles comprising the composition are also provided. The composition can be molded into shaped articles by a variety of methods, such as injection molding, extrusion, rotational molding, blow molding, and thermoforming. The article can be a molded article, a thermoformed article, an extruded film, an extruded sheet, a honeycomb structure, one or more layers of a multi-layer article, a substrate for a coated article, or a substrate for a metallized article.

Articles comprising the composition can be used in various consumer products. In an aspect, the article can be an automotive component. In an aspect, the article can be a consumer electronic component, for example a housing for a consumer electronic device.

Particular articles can include, but are not limited to, exterior automobile components (e.g., grill, mirror housing, pillar, spoiler, logo, roof rail, bezel, trim, fender), interior automobile components (e.g., decorative parts, electronic housings, instrument panel components, navigation system, housing frames), storage boxes, a personal equipment part, a home appliance component, furniture, appliance housings (e.g., robot cleaners, drones), and consumer electronics devices (e.g., device housings or components for laptops, phones, tablets, batteries, wireless charging, AR/VR goggles).

In an aspect the article can be an automotive bumper, an automotive exterior component, an automobile mirror housing, an automobile wheel cover, an automobile instrument panel or trim, an automobile glove box, an automobile door hardware or other interior trim, an automobile exterior light, an automobile part within the engine compartment, an agricultural tractor or device part, a window or a component thereof, a construction equipment vehicle or device part, a marine or personal water craft part, an all-terrain vehicle or all-terrain vehicle part, plumbing equipment, a valve or pump, an air conditioning heating or cooling part, a furnace or heat pump part, a computer housing, a computer housing or business machine housing or part, a housing or part for monitors, a computer router, a desk top printer, a large office/industrial printer, an electronics part, a projector part, an electronic display part, a copier part, a scanner part, an electronic printer toner cartridge, a handheld electronic device housing, a housing for a hand-held device, a hair drier, an iron, a coffee maker, a toaster, a washing machine or washing machine part, a microwave, an oven, a power tool, an electric component, an electric enclosure, a lighting part, a component for a lighting fixture, a dental instrument, a medical instrument, a medical or dental lighting part, an aircraft part, a train or rail part, a seating component, a sidewall, a ceiling part, cookware, a medical instrument tray, an animal cage, fibers, a laser welded medical device, fiber optics, a lens (auto and non-auto), a cell phone part, a greenhouse component, a sun room component, a fire helmet, a safety shield, safety glasses, a gas pump part, a humidifier housing, a thermostat control housing, an air conditioner drain pan, an outdoor cabinet, a telecom enclosure or infrastructure, a Simple Network Detection System (SNIDS) device, a network interface device, a smoke detector, a component or device in a plenum space, a medical scanner, X-ray equipment, a component for a medical application or a device, an electrical box or enclosure, and an electrical connector, a construction or agricultural equipment, and a turbine blade.

In an aspect the article can be a component of an aircraft interior or a train interior, an access panel, access door, air flow regulator, air gasper, air grille, arm rest, baggage storage door, balcony component, cabinet wall. ceiling panel, door pull, door handle, duct housing, enclosure for an electronic device, equipment housing, equipment panel, floor panel, food cart, food tray, galley surface, handle, housing for television, light panel, magazine rack, telephone housing, partition, part for trolley cart, seat back, seat component, railing component, seat housing, shelve, side wall, speaker housing, storage compartment, storage housing, toilet seat, tray table, tray, trim panel, window molding, window slide, a balcony component, baluster, ceiling panel, cover for a life vest, cover for a storage bin, dust cover for a window, layer of an electrochromic device, lens for a television, electronic display, gauge, or instrument panel, light cover, light diffuser, light tube, light pipes, mirror, partition, railing, refrigerator door, shower door, sink bowl, trolley cart container, trolley cart side panel, or window.

This disclosure is further illustrated by the following examples, which are nonlimiting.

### EXAMPLES

Materials used for the following examples are shown in Table 1.

**Table 1**

| Component | Chemical Description | Supplier |
|---|---|---|
| BPA-PC-1 | Linear bisphenol A polycarbonate, CAS Reg. No. 25971-63-5, having a molecular weight (Mw) of 30,000 -31,000 grams per mole, as determined by gel permeation chromatography relative to linear bisphenol A polycarbonate standards, produced by interfacial polymerization and endcapped with phenol | SABIC |
| BPA-PC-2 | Linear bisphenol A polycarbonate, CAS Reg. No, 25971-63-5, having a molecular weight (Mw) of 20,000 - 22,000 grams per mole, as determined by gel permeation chromatography relative to linear bisphenol A polycarbonate standards, produced by interfacial polymerization and endcapped with phenol | SABIC |
| ITR-BPA PC-1 | Poly(bisphenol A carbonate-resorcinol phthalate) having 73-77 mol% bisphenol A carbonate linkages, 5-7 mol% resorcinol carbonate linkages, and 18-20 mol% resorcinol phthalate linkages with an isophthalate:terephthalate ratio of 1:1; Tg = 140-145°C, Mw = 29,000-31,000 grams per mole, as determined by gel permeation chromatography relative to linear bisphenol A polycarbonate standards, produced by interfacial polymerization and endcapped with phenol | SABIC |
| ITR-BPA PC-2 | Poly(bisphenol A carbonate-resorcinol phthalate) having 59-61 mol% bisphenol A carbonate linkages, 5-7 mol% resorcinol carbonate linkages, and 33-35 mol% resorcinol phthalate linkages with an isophthalate:terephthalate ratio of 1:1; Mw = 24,000-26,000 grams per mole, as determined by gel permeation chromatography relative to linear bisphenol A polycarbonate standards, produced by interfacial polymerization and endcapped with phenol | SABIC |
| ITR-BPA PC-3 | Poly(bisphenol A carbonate-resorcinol phthalate) having 8-12 mol% bisphenol A carbonate linkages, 8-12 mol% resorcinol carbonate linkages, 78-82 mol% resorcinol phthalate ester linkages with an isophthalate:terephthalate ratio of 1:1; Tg = 130-142°C, Mw = 20,000-22,000 g/mol as determined by gel permeation chromatography relative to linear bisphenol A polycarbonate standards, produced by interfacial polymerization and endcapped with phenol | SABIC |
| DMBPC-BPA PC | Copolycarbonate comprising bisphenol A carbonate units and 50 wt% 1,1-bis(4-hydroxy-3-methylphenyl)cyclohexane carbonate units, having a Mw = 21,000-26,000 grams per mole, as determined by gel permeation chromatography relative to linear bisphenol A polycarbonate standards, produced by interfacial polymerization and endcapped with phenol | SABIC |
| PETS | Pentaerythritol tetrastearate, CAS Reg. No. 115-83-3 | FACI SpA |
| H-Si | Organo-modified siloxane additive obtained as TEGOMER^{™} H-Si 6441P | Degussa |
| UVA | 2-[2-hydroxy-3,5-di-(1,1-dimethylbenyl)]-2H-benzotriazol, available as TINUVIN^{™} 234 | BASF Corp. |
| TBPP | Tris(2,4-di-tert-butylphenyl) phosphite, CAS Reg. No. 31570-04-4; available as IRGAFOS^{™} 168 | BASF Corp. |
| PEPQ | Reaction products of phosphorus trichloride with 1,1'-biphenyl and 2,4-bis(1,1-dimethylethyl)phenol, CAS Reg. No. 119345-01-6; obtained as HOSTANOX^{™} P-EPQ | Clariant |
| KSS | Potassium diphenylsulfonesulfonate. CAS Reg. No. 63316-43-8 | Arichem |
| Epoxy | 3,4-Epoxycyclohexanemethyl 3,4-epoxycyclohexanecaiboxylate, CAS Reg. No. 2386-87-0; obtained as ERL 4221 | Dow Chemical |
| Green Dye | Anthraquinone Solvent Green 3, obtained as MACROLEX^{™} Green 5B | Lanxess |
| Orange Dve | Methine Disperse Orange 47, obtained as MACROLEX^{™} Orange R | Lanxess |
| Red Dye | Anthraquinone Solvent Red 207, obtained as KEYPLAST^{™} Magenta M6B | Milliken |

Components of the compositions were compounded and extruded. Molded parts for physical testing were prepared by injection molding. Test methods are described below in Table 2.

**Table 2**

| Test and Condition | Unit | Specimen | Standard |
|---|---|---|---|
| Izod Impact, notched, 23°C | J/m | 3.2 mm bar | ASTM D 256 |
| Multi-axial impact, various temperatures, | J | 3.2 mm thick 100 mm disk | ASTM D3763 |
| Heat Deflection Temperature (HDT), 1.82 MPa | °C | 3.1 mm flexural bar | ASTM D 648 |
| Tensile Modulus, 5 mm/min | MPa | Type I bar | ASTM D 638 |
| Tensile Stress at yield, Type I, 50 mm/min | MPa | Type I bar | ASTM D 638 |
| Tensile stress at break, Type I, 50 mm/min | Mpa | Type I bar | ASTM D 638 |
| Tensile Strain at yield, Type I, 50 mm/min | % | Type I bar | ASTM D 638 |
| Tensile Strain at break, Type I, 50 mm/min | % | Type I bar | ASTM D 638 |
| Color: L*, a*, b*; D65 illuminant; 10° observer; specular component excluded; measured in reflection mode | / | 3.2 mm thickness | ASTM E 308-08 |
| Gloss, 20°, 60°, 85° | / | | ASTM D 2457 (20°, 60°) |
| | | | ASTM D 523 (85°) |
| Melt volume-flow rate (MVR) | cm³/10 min | | ASTM D1238 |

### Examples 1-8

Table 3 shows compositions and the properties for Examples 1-8. The amount of each component is shown in weight percent based on the total weight of the composition.

**Table 3**

| Component | Unit | 1* | 2 | 3 | 4 | 5* | 6 | 7 | 8* |
|---|---|---|---|---|---|---|---|---|---|
| BPA-PC-1 | wt% | | | | | | 40.000 | | 99.399 |
| BPA-PC-2 | wt% | 54.380 | 44.380 | 29.380 | 14.380 | | 19.600 | 14.179 | |
| ITR-BPA PC-1 | wt% | 45.000 | 45.000 | 45.000 | 45.000 | | | 45.000 | |
| DMBPC-BPA PC | wt% | 0 | 10.000 | 25.000 | 40.000 | 99.399 | 39.799 | 40.000 | |
| PETS | wt% | 0.300 | 0.300 | 0.300 | 0.300 | 0.300 | 0.300 | 0.300 | 0.300 |
| UVA | wt% | 0.200 | 0.200 | 0.200 | 0.200 | | | 0.200 | |
| TBPP | wt% | | | | | 0.100 | 0.100 | | 0.100 |
| PEPQ | wt% | 0.060 | 0.060 | 0.060 | 0.060 | | | 0.060 | |
| KSS | wt% | 0.030 | 0.030 | 0.030 | 0.030 | | | 0.030 | |
| Epoxy | wt% | 0.030 | 0.030 | 0.030 | 0.030 | | | 0.030 | |
| Green Dye | wt% | | | | | 0.110 | 0.110 | 0.110 | 0.110 |
| Orange Dye | wt% | | | | | 0.023 | 0.023 | 0.023 | 0.023 |
| Red Dye | wt% | | | | | 0.068 | 0.068 | 0.068 | 0.068 |
| Properties | | | | | | | | | |
| Mod. of Elasticity | MPa | 2260 | 2290 | 2320 | 2382 | 2560 | 2313 | 2387 | |
| Tens. Strength @ yld | MPa | 63 | 65 | 68 | 71 | 79 | 70 | 72 | |
| Tens. Strength @ brk | MPa | 65 | 64 | 68 | 70 | 61 | 64 | 64 | |
| Elong. @ yld | % | 6.4 | 6.6 | 6.9 | 71 | 7.9 | 7.4 | 7.1 | |
| Elong. @ brk | % | 125 | 124 | 138 | 148 | 48 | 103 | 120 | |
| Ductility | % | 60 | 0 | 0 | 0 | 0 | 0 | 0 | |
| Impact Strength | J/m | 545 | 109 | 79 | 63 | 31 | 66 | 61 | |
| MAI, Total E, 23°C | J | 68 | 69 | 71 | 69 | 4 | 72 | 70 | |
| MAI, Ductility, 23°C | % | 100 | 100 | 100 | 100 | 0 | 100 | 100 | |
| MAI, Total E, 0°C | J | | | | | 2 | 81 | 73 | |
| MAI, Ductility, 0°C | % | | | | | 0 | 100 | 100 | |
| L* | | | | | | 27.26 | 27.32 | 27.45 | |
| a* | | | | | | 0.20 | 0.19 | 0.17 | |
| b* | | | | | | -0.97 | -0.99 | -1.07 | |
| 20 Degree Gloss | % | | | | | 104 | 104 | 105 | |
| 60 Degree Gloss | % | | | | | 102 | 103 | 103 | |
| 85 Degree Gloss | % | | | | | 101 | 100 | 99 | |
| HDT | °C | | | | | 117.9 | 123.9 | 120.8 | |

| | | | | | | | | | |
|---|---|---|---|---|---|---|---|---|---|
| *indicates a comparative example | | | | | | | | | |

As shown in Table 3, the addition of the DMBPC-BPA copolycarbonate provides a slight improvement in modulus and tensile strength at yield and elongation at yield. While the Izod impact strength was observed to decrease with increasing amounts of DMBPC-BPA copolycarbonate, the multi-axial impact strength was maintained at 100% ductility with similar Total Energy Values.

Examples 5-8 of Table 3 show three compositions which were colored using the same colorant package to provide a "piano black" appearance. As can be seen from the L*a*b* color measurements shown in Table 3 as well as the gloss measurements from three angels, the aesthetics and the appearance of the three compositions was essentially identical, which agreed with the visual assessment (e.g., by the unaided eye).

Relative to comparative example 5*, the compositions according to examples 6 and 7 exhibited a slight reduction in modulus and tensile properties. However, the compositions of both examples 6 and 7 exhibited a large improvement in elongation at break and total energy for multi-axial impact both at room temperature and at 0°C compared to comparative example 5*. The notched Izod impact strength for both examples 6 and 7 was also significantly improved compared to that of comparative example 5*.

Scratch test measurements were performed in accordance with ASTM D7027-13/ISO 19252:08, using SMS Scratch test equipment, outfitted with a stylus with a 1 mm spherical scratch tip, and a scratch speed of 100mm/min. The scratch test results are shown in Table 4. Results are reported in terms of the onset of visibility, expressed in Newtons (N), which is the force at which the scratch starts to become visible.

**Table 4**

| Example | Scratch Performance (N, Average) | Standard Deviation |
|---|---|---|
| 5* | 20 | 1 |
| 7 | 17 | 2 |
| 6 | 13 | 1 |
| 8* | 9 | 1 |

As shown in Table 4, compared to a BPC-PC homopolymer composition (shown as example 8*), the introduction of the DMBPC copolymer leads to a significant improvement in scratch resistance, with an even larger improvement in scratch resistance when the DMBPC and the ITR copolycarbonates are included in the composition at the same DMBPC loading.

Additional formulations were prepared and tested as shown in Tables 5 and 6. The amount of each component is provided in weight percent, based on the total weight of the composition.

**Table 5**

| Component | Unit | 9* | 10 | 11 | 12 | 13 | 14 | 15* | 16 |
|---|---|---|---|---|---|---|---|---|---|
| BPA-PC-2 | wt% | 54.380 | 44.380 | 29.380 | 24.380 | 19.380 | 14.380 | | 19.680 |
| ITR-BPA PC-1 | wt% | 45.000 | 45.000 | 45.000 | 45.000 | 45.000 | 45.000 | 45.000 | 45.000 |
| DMBPC-BPA PC | wt% | | 10.000 | 25.000 | 30.000 | 35.000 | 40.000 | 54.380 | 35.000 |
| PETS | wt% | 0.300 | 0.300 | 0.300 | 0.300 | 0.300 | 0.300 | 0.300 | |
| UVA | wt% | 0.200 | 0.200 | 0.200 | 0.200 | 0.200 | 0.200 | 0.200 | 0.200 |
| PEPQ | wt% | 0.060 | 0.060 | 0.060 | 0.060 | 0.060 | 0.060 | 0.060 | 0.060 |
| KSS | wt% | 0.030 | 0.030 | 0.030 | 0.030 | 0.030 | 0.030 | 0.030 | 0.030 |
| Epoxy | wt% | 0.030 | 0.030 | 0.030 | 0.030 | 0.030 | 0.030 | 0.030 | 0.030 |
| DMBPC content in composition | wt% | 0 | 5 | 12.5 | 15 | 17.5 | 20 | 27 | 17.5 |
| ITR content in composition | wt% | 9 | 9 | 9 | 9 | 9 | 9 | 9 | 9 |
| DMBPC:ITR weight ratio | | 0.00 | 0.56 | 1.39 | 1.67 | 1.94 | 2.22 | 3.00 | 1.94 |
| Properties | | | | | | | | | |
| Transmission | % | 91.8 | 91.7 | 91.4 | 91.4 | 91.4 | 91.0 | 87.3 | 91.5 |
| Haze | % | 1.2 | 1.1 | 1.1 | 1.2 | 1.0 | 1.1 | 4.4 | 0.9 |

| | | | | | | | | | |
|---|---|---|---|---|---|---|---|---|---|
| *indicates a comparative example | | | | | | | | | |

**Table 6**

| Component | Unit | E17* | E18* | E19* | E20* | E21* | E22* | E23* | E24* | E25* | E26* | E27* | E28* |
|---|---|---|---|---|---|---|---|---|---|---|---|---|---|
| BPA-PC-2 | wt% | 54.6 | 14.6 | | 37.1 | 22.5 | 12.1 | | 49.6 | 35.0 | 24.6 | 12.5 | |
| ITR-BPA PC-1 | wt% | 45.0 | 45.0 | 45.0 | | | | | | | | | |
| ITR-BPA PC-2 | wt% | | | | 22.5 | 22.5 | 22.5 | 22.5 | | | | | |
| ITR-BPA PC-3 | wt% | | | | | | | | 10.0 | 10.0 | 10.0 | 10.0 | 10.0 |
| DMBPC-BPA PC | wt% | | 40.0 | 54.6 | 40.0 | 54.6 | 65.0 | 77.1 | 40.0 | 54.6 | 65.0 | 77.1 | 89.6 |
| PETS | wt% | 0.30 | 0.30 | 0.30 | 0.30 | 0.30 | 0.30 | 0.30 | 0.30 | 0.30 | 0.30 | 0.30 | 0.30 |
| PEPQ | wt% | 0.06 | 0.06 | 0.06 | 0.06 | 0.06 | 0.06 | 0.06 | 0.06 | 0.06 | 0.06 | 0.06 | 0.06 |
| Epoxy | wt% | 0.03 | 0.03 | 0.03 | 0.03 | 0.03 | 0.03 | 0.03 | 0.03 | 0.03 | 0.03 | 0.03 | 0.03 |
| DMBPC content in composition | | 0 | 36 | 49.14 | 36 | 49.14 | 58.5 | 69.39 | 36 | 49.14 | 58.5 | 69.39 | 80.64 |
| ITR content in composition | | 9 | 9 | 9 | 9 | 9 | 9 | 9 | 9 | 9 | 9 | 9 | 9 |
| DMBPC:ITR weight ratio | | 0 | 4 | 5.46 | 4 | 5.46 | 6.5 | 7.71 | 4 | 5.46 | 6.5 | 7.71 | 8.96 |
| Properties | | | | | | | | | | | | | |
| MVR | cm³/ 10min | 15.5 | 11.6 | 10.7 | 18 | 16.6 | 15.9 | 14.7 | 20.6 | 18.8 | 17.3 | 16.4 | 14.6 |
| Mod. of Elasticity | MPa | 2262 | 2360 | 2400 | 2366 | 2416 | 2446 | 2486 | 2360 | 2412 | 2458 | 2490 | 2550 |
| Tens. Strength @ vld | MPa | 62.7 | 69.8 | 72.1 | 70.1 | 72.5 | 73.7 | 75.3 | 70.3 | 72.4 | 74.5 | 76.2 | 77.9 |
| Tens. Strength @ brk | MPa | 69 | 70 | 65 | 59 | 58 | 57 | 60 | 57 | 56 | 62 | 60 | 65 |
| Elong. @ yld | % | 6.3 | 7.1 | 7.3 | 7.1 | 7.3 | 7.4 | 7.5 | 7.1 | 7.3 | 7.5 | 7.6 | 7.7 |
| Elong. @ brk | % | 130 | 111 | 93 | 98 | 72 | 60 | 56 | 89 | 70 | 71 | 88 | 65 |
| Ductility, 23°C | % | 759 | 52 | 52 | 44 | 32 | 28 | 31 | 43 | 31 | 32 | 28 | 27 |
| Impact Strength, 23°C | J/m | 100 | 0 | 0 | 0 | 0 | 0 | 0 | 0 | 0 | 0 | 0 | 0 |
| Ductility, 0°C | % | 487 | NM | NM | NM | NM | NM | NM | NM | NM | NM | NM | NM |
| Impact Strength, 0°C | J/m | 0 | NM | NM | NM | NM | NM | NM | NM | NM | NM | NM | NM |
| Haze | % | 92 | 91 | 86 | 71 | 69 | 69 | 69 | 58 | 58 | 57 | 55 | 54 |
| Transmission | % | 0.7 | 0.9 | 5.7 | >95 | >95 | >95 | >95 | >95 | >95 | >95 | >95 | >95 |
| HDT | °V | 122 | 120 | 119 | 118 | 118 | 117 | 117 | 119 | 118 | 118 | 116 | 116 |
| MAI, Total E, 23°C | J | 60.7 | 62.8 | 66.8 | 57.3 | 58.6 | 42.4 | 47.4 | 52.2 | 38.8 | 51.6 | 32.2 | 26.3 |
| MAI, Total E, -30°C | J | 73.1 | | 58.1 | 39 | | | | | | | | |

| | | | | | | | | | | | | | |
|---|---|---|---|---|---|---|---|---|---|---|---|---|---|
| *indicates a comparative example; "NM" means not measured | | | | | | | | | | | | | |

As shown in Tables 5 and 6, when the amount of DMBPC in the composition is higher than 25 wt%, an unexpected increase in haze is observed. This is also illustrated in FIG. 1, which shows the haze of the composition as a function of DMBPC content. Thus a desirable combination of properties can be provided by the composition of the present disclosure.

Additional formulations were prepared and tested as shown in Table 7. The amount of each component is provided in weight percent, based on the total weight of the composition.

**Table 7**

| Component | Unit | 29* | 30* | 31* | 32* | 33 | 34 | 35 |
|---|---|---|---|---|---|---|---|---|
| BPA-PC-2 | wt% | 54.179 | 53.879 | 53.479 | 52.479 | 13.879 | 13.479 | 12.479 |
| ITR-BPA PC-1 | wt% | 45 | 45 | 45 | 45 | 45 | 45 | 45 |
| DMBPC-BPA PC | wt% | | | | | 40 | 40 | 40 |
| PETS | wt% | 0.3 | 0.6 | 1.0 | 0 | 0.6 | 1.0 | 0 |
| H-Si | wt% | | | | 2.0 | | | 2.0 |
| UVA | wt% | 0.2 | 0.2 | 0.2 | 0.2 | 0.2 | 0.2 | 0.2 |
| PEPQ | wt% | 0.06 | 0.06 | 0.06 | 0.06 | 0.06 | 0.06 | 0.06 |
| KSS | wt% | 0.03 | 0.03 | 0.03 | 0.03 | 0.03 | 0.03 | 0.03 |
| Epoxy | wt% | 0.03 | 0.03 | 0.03 | 0.03 | 0.03 | 0.03 | 0.03 |
| Green Dye | wt% | 0.11 | 0.11 | 0.11 | 0.11 | 0.11 | 0.11 | 0.11 |
| Orange Dye | wt% | 0.023 | 0.023 | 0.023 | 0.023 | 0.023 | 0.023 | 0.023 |
| Red Dye | wt% | 0.068 | 0.068 | 0.068 | 0.068 | 0.068 | 0.068 | 0.068 |
| Properties | | | | | | | | |
| DMBPC content in composition | wt% | 0 | 0 | 0 | 0 | 20 | 20 | 20 |
| ITR content in composition | wt% | 9 | 9 | 9 | 9 | 9 | 9 | 9 |
| DMBPC:ITR weight ratio | | 0 | 0 | 0 | 0 | 2.22 | 2.22 | 2.22 |
| Properties | | | | | | | | |
| Mod. of Elasticity | MPa | 2218 | 2246 | 22 70 | 2196 | 2308 | 2346 | 2276 |
| Tens. Strength @ yld | MPa | 64 | 64 | 65 | 63 | 71 | 71 | 70 |
| Tens. Strength @ brk | MPa | 65 | 66 | 64 | 62 | 57 | 56 | 57 |
| Elong. @ yld | % | 6.4 | 6.3 | 6.2 | 6.2 | 7.0 | 6.8 | 6.9 |
| Elong. @ brk | % | 123 | 122 | 120 | 118 | 71 | 63 | 98 |
| Ductility | % | 40 | 0 | 0 | 40 | 0 | 0 | 0 |
| Impact Strength | J/m | 382 | 129 | 104 | 381 | 44 | 42 | 59 |
| MAI, Total E, 23°C | J | 70 | 67 | 73 | 75 | 79 | 74 | 71 |
| MAI, Ductility, 23°C | % | 100 | 100 | 100 | 100 | 80 | 100 | 100 |
| MAI, Total E, 0°C | J | 73 | 65 | 70 | 67 | 66 | 80 | 72 |
| MAI, Ductility, 0°C | 0/0 | 100 | 80 | 100 | 100 | 60 | 40 | 20 |
| HDT | °C | 121.2 | 120.2 | 117.3 | 119.4 | 117.8 | 115.3 | 115.6 |
| L* | | 27.4 | 27.4 | 27.4 | 31.8 | 27.4 | 27.4 | 31.4 |
| a* | | 0.20 | 0.17 | 0.18 | 0.35 | 0.19 | 0.17 | 0.31 |
| b* | | -1.08 | -1.08 | -1.07 | -3.59 | -1.05 | -1.08 | -4.42 |
| Appearance comment | | | | | hazy | | | hazy |
| Scratch Performance (N, Average) | N | 9 | 9 | 11 | 12 | 15 | 16 | 15 |

| | | | | | | | | |
|---|---|---|---|---|---|---|---|---|
| *indicates a comparative example | | | | | | | | |

As shown in Table 7, the amount and type of additives such as mold release agents and slip promoters can be varied.

Additional formulations were prepared and tested as shown in Table 8. The amount of each component is provided in weight percent, based on the total weight of the composition.

**Table 8**

| Component | Unit | 36* | 37* | 38* | 39* | 40* | 41* | 42* |
|---|---|---|---|---|---|---|---|---|
| BPA-PC-1 | wt% | | | | 50 | 25 | | |
| BPA-PC-2 | wt% | | | 100 | | | 25 | |
| ITR-BPA PC-1 | wt% | | | | | | | |
| ITR-BPA PC-2 | wt% | | 100 | | | 25 | 25 | 50 |
| DMBPC-BPA PC | wt% | 100 | | | 50 | 50 | 50 | 50 |
| DMBPC content in composition | wt% | 50 | 0 | 0 | 25 | 25 | 25 | 25 |
| ITR content in composition | wt% | 0 | 40 | 0 | 10 | 10 | 10 | 20 |
| DMBPC:ITR weight ratio | | - | - | - | 2.5 | 2.5 | 2.5 | 1.25 |
| Properties | | | | | | | | |
| MVR | cm³/10 min | 14 | 6.6 | 10 | 10 | 11 | 16 | 13 |
| Tg | °C | 145 | 146 | 141 | 145 | 146 | 145 | 142 |
| Transmission¹ | % | 87 | 91 | 88 | 85 | 68 | 69 | 52 |
| Haze¹ | % | 4.4 | 1.2 | 1.2 | 4.9 | 89 | 92 | 87 |

| | | | | | | | | |
|---|---|---|---|---|---|---|---|---|
| *indicates a comparative example; ¹Haze and transmission were determined using 2.5 mm flat color chips | | | | | | | | |

As shown in Table 8, when the cyclohexylidene-bridged bisphenol:(isophthalic acid, terephthalic acid, and resorcinol ester unit) weight ratio is outside the range defined by the present disclosure, the desired combination of properties are not obtained. Specifically, when the cyclohexylidene-bridged bisphenol:(isophthalic acid, terephthalic acid, and resorcinol ester unit) weight ratio is 2.5 or greater, the compositions do not achieve the desired haze. Thus the present inventors have unexpectedly found that the particular combination of components in the particular amounts set forth in the present disclosure can unexpectedly provide the desired combination of properties. A significant improvement is therefore provided by the present disclosure.

The compositions, methods, and articles can alternatively comprise, consist of, or consist essentially of, any appropriate materials, steps, or components herein disclosed. The compositions, methods, and articles can additionally, or alternatively, be formulated so as to be devoid, or substantially free, of any materials (or species), steps, or components, that are otherwise not necessary to the achievement of the function or objectives of the compositions, methods, and articles.

All ranges disclosed herein are inclusive of the endpoints, and the endpoints are independently combinable with each other. "Combinations" is inclusive of blends, mixtures, alloys, reaction products, and the like. The terms "first," "second," and the like, do not denote any order, quantity, or importance, but rather are used to distinguish one element from another. The terms "a" and "an" and "the" do not denote a limitation of quantity, and are to be construed to cover both the singular and the plural, unless otherwise indicated herein or clearly contradicted by context. "Or" means "and/or" unless clearly stated otherwise. Reference throughout the specification to "an aspect" means that a particular element described in connection with the aspect is included in at least one aspect described herein, and may or may not be present in other aspects. The term "combination thereof" as used herein includes one or more of the listed elements, and is open, allowing the presence of one or more like elements not named. In addition, it is to be understood that the described elements may be combined in any suitable manner in the various aspects.

Unless specified to the contrary herein, all test standards are the most recent standard in effect as of the filing date of this application, or, if priority is claimed, the filing date of the earliest priority application in which the test standard appears.

Unless defined otherwise, technical and scientific terms used herein have the same meaning as is commonly understood by one of skill in the art to which this application belongs.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

As used herein, the term "hydrocarbyl", whether used by itself, or as a prefix, suffix, or fragment of another term, refers to a residue that contains only carbon and hydrogen. The residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. However, when the hydrocarbyl residue is described as substituted, it may, optionally, contain heteroatoms over and above the carbon and hydrogen members of the substituent residue. Thus, when specifically described as substituted, the hydrocarbyl residue can also contain one or more carbonyl groups, amino groups, hydroxyl groups, or the like, or it can contain heteroatoms within the backbone of the hydrocarbyl residue. The term "alkyl" means a branched or straight chain, saturated aliphatic hydrocarbon group, e.g., methyl, ethyl, n-propyl, i-propyl, n-butyl, s-butyl, t-butyl, n-pentyl, s-pentyl, and n- and s-hexyl. "Alkenyl" means a straight or branched chain, monovalent hydrocarbon group having at least one carbon-carbon double bond (e.g., ethenyl (-HC=CH₃)). "Alkoxy" means an alkyl group that is linked via an oxygen (i.e., alkyl-O-), for example methoxy, ethoxy, and sec-butyloxy groups. "Alkylene" means a straight or branched chain, saturated, divalent aliphatic hydrocarbon group (e.g., methylene (-CH₂-) or, propylene (-(CH₂)₃-)). "Cycloalkylene" means a divalent cyclic alkylene group, -CₙH₂ₙ₋ₓ, wherein x is the number of hydrogens replaced by cyclization(s). "Cycloalkenyl" means a monovalent group having one or more rings and one or more carbon-carbon double bonds in the ring, wherein all ring members are carbon (e.g., cyclopentyl and cyclohexyl). "Aryl" means an aromatic hydrocarbon group containing the specified number of carbon atoms, such as phenyl, tropone, indanyl, or naphthyl. "Arylene" means a divalent aryl group. "Alkylarylene" means an arylene group substituted with an alkyl group. "Arylalkylene" means an alkylene group substituted with an aryl group (e.g., benzyl). The prefix "halo" means a group or compound including one more of a fluoro, chloro, bromo, or iodo substituent. A combination of different halo atoms (e.g., bromo and fluoro), or only chloro atoms can be present. The prefix "hetero" means that the compound or group includes at least one ring member that is a heteroatom (e.g., 1, 2, or 3 heteroatom(s)), wherein the heteroatom(s) is each independently N, O, S, Si, or P. "Substituted" means that the compound or group is substituted with at least one (e.g., 1, 2, 3, or 4) substituents that can each independently be a C₁₋₉ alkoxy, a C₁₋₉ haloalkoxy, a nitro (-NO₂), a cyano (-CN), a C₁₋₆ alkyl sulfonyl (-S(=O)₂-alkyl), a C₆₋₁₂ aryl sulfonyl (-S(=O)₂-aryl), a thiol (-SH), a thiocyano (-SCN), a tosyl (CH₃C₆H₄SO₂-), a C₃₋₁₂ cycloalkyl, a C₂₋₁₂ alkenyl, a C₅₋₁₂ cycloalkenyl, a C₆₋₁₂ aryl, a C₇₋₁₃ arylalkylene, a C₄₋₁₂ heterocycloalkyl, and a C₃₋₁₂ heteroaryl instead of hydrogen, provided that the substituted atom's normal valence is not exceeded. The number of carbon atoms indicated in a group is exclusive of any substituents. For example -CH₂CH₂CN is a C₂ alkyl group substituted with a nitrile.

While particular embodiments have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

## Claims

1. A polycarbonate composition comprising:
10 to 60 weight percent, based on the total weight of the composition, of a bisphenol A homopolycarbonate;
a polycarbonate comprising repeating units derived from a substituted or unsubstituted cyclohexylidene-bridged bisphenol in an amount effective to provide a substituted or unsubstituted cyclohexylidene-bridged bisphenol content of 25 weight percent or less, based on the total weight of the composition; and
a polyester-carbonate comprising ester units derived from isophthalic acid, terephthalic acid, and resorcinol;
wherein the composition has a cyclohexylidene-bridged bisphenol:(isophthalic acid, terephthalic acid, and resorcinol ester unit) weight ratio of less than 2.5.

2. The polycarbonate composition of claim 1, wherein the composition has a cyclohexylidene-bridged bisphenol:(isophthalic acid, terephthalic acid, and resorcinol ester unit) weight ratio of less than 2.25.

3. The polycarbonate composition of claim 1 or 2, wherein the composition exhibits a haze of less than 2.5, or less than 2, or less than 1.5, as determined using a 2.5 mm thick plaque according to ASTM-D1003-00.

4. The polycarbonate composition of any of claims 1 to 3, wherein the polycarbonate comprising repeating units derived from the substituted or unsubstituted cyclohexylidene-bridged bisphenol is present in an amount of 5 to 45 weight percent, based on the total weight of the composition.

5. The polycarbonate composition of any of claims 1 to 4, wherein the polycarbonate comprising repeating units derived from a substituted or unsubstituted cyclohexylidene-bridged bisphenol comprises
a first carbonate repeat unit having the structure 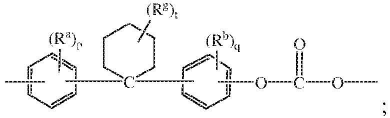 and
a second carbonate repeat unit having the structure 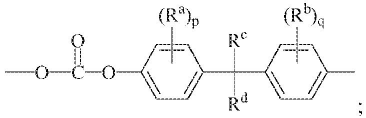 wherein in the foregoing formulas,
R^{a}, R^{b}, and R^{g} are each independently a C₁₋₁₂ alkyl group,
R^{c} and R^{d} are each independently hydrogen, a C₁₋₁₂ alkyl, a cyclic C₁₋₁₂ alkyl, a C₇₋₁₂ arylalkyl, a C₁₋₁₂ heteroalkyl, or a cyclic C₇₋₁₂ heteroarylalkyl;
p and q are each independently 0 to 4, and
t is 0 to 10.

6. The polycarbonate composition of any of claims 1 to 5, wherein the polycarbonate comprising repeating units derived from a substituted or unsubstituted cyclohexylidene-bridged bisphenol is of the structure 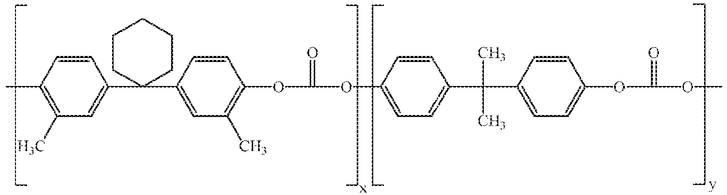 wherein a molar ratio of x to y is 25:75 to 75:25.

7. The polycarbonate composition of any of claims 1 to 6, wherein the polycarbonate comprising repeating units derived from a substituted or unsubstituted cyclohexylidene-bridged bisphenol has a substituted or unsubstituted cyclohexylidene-bridged bisphenol content of 40 to 60 weight percent, based on the total weight of the polycarbonate comprising repeating units derived from a substituted or unsubstituted cyclohexylidene-bridged bisphenol.

8. The polycarbonate composition of any of claims 1 to 7, wherein the polyester--carbonate is of the formula 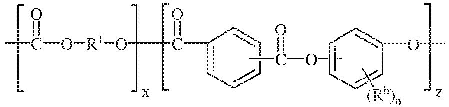 wherein
R¹ is derived from an aromatic dihydroxy compound of the formula 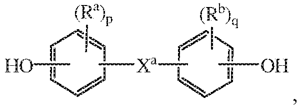
wherein R^{a} and R^{b} are each independently a halogen, C₁₋₁₂ alkoxy, or C₁₋₁₂ alkyl, p and q are each independently integers of 0 to 4, and X^{a} is single bond, -O-, -S-, -S(O)-, -S(O))₂-, -C(O)-, or a C₁₋₆₀ organic group; and
R^{h} is independently at each occurrence a halogen atom, a C₁₋₁₀ alkyl group, a halogen-substituted C₁₋₁₀ alkyl group, a C₆₋₁₀ aryl group, or a halogen-substituted C₆₋₁₀ aryl group, and n is 0 to 4.

9. The polycarbonate composition of any of claims 1 to 8, wherein the ester units derived from isophthalic acid, terephthalic acid, and resorcinol are present in the polyester-carbonate in an amount of 10 to 30 weight percent, based on the total weight of the polyester-carbonate.

10. The polycarbonate composition of any of claims 1 to 9, comprising, based on the total weight of the composition:
10 to 50 weight percent of the bisphenol A homopolycarbonate;
35 to 55 weight percent of the polyester-carbonate; and
5 to 45 weight percent of the polycarbonate comprising repeating units derived from a substituted or unsubstituted cyclohexylidene-bridged bisphenol;
wherein the composition has a cyclohexylidene-bridged bisphenol content of 22 weight percent or less; and
wherein the cyclohexylidene-bridged bisphenol:(isophthalic acid, terephthalic acid, and resorcinol ester unit) weight ratio is less than 2.25.

11. The polycarbonate composition of any of claims 1 to 10, further comprising 0.1 to 10 weight percent, based on the total weight of the polycarbonate composition, of an additive composition.

12. The polycarbonate composition of claim 11, wherein the additive composition comprises a flame retardant, a colorant composition, a stabilizer, a mold release agent, or a combination thereof.

13. A method of making the polycarbonate composition of any of claims 1 to 12, the method comprising melt-mixing the components of the composition, and, optionally, extruding the composition.

14. An article comprising the polycarbonate composition of any of claims 1 to 12.

## Patentansprüche

1. Polycarbonat-Zusammensetzung, umfassend:
10 bis 60 Gewichtsprozent, bezogen auf das Gesamtgewicht der Zusammensetzung, eines Bisphenol-A-Homopolycarbonats;
ein Polycarbonat, das sich wiederholende Einheiten umfasst, die von einem substituierten oder unsubstituierten cyclohexylidenverbrückten Bisphenol abgeleitet sind, in einer Menge, die wirksam ist, um einen Gehalt an substituiertem oder unsubstituiertem cyclohexylidenverbrücktem Bisphenol von 25 Gewichtsprozent oder weniger, bezogen auf das Gesamtgewicht der Zusammensetzung, bereitzustellen; und
ein Polyestercarbonat, das Estereinheiten enthält, die von Isophthalsäure, Terephthalsäure und Resorcin abgeleitet sind;
wobei die Zusammensetzung ein Cyclohexyliden-verbrücktes Bisphenol:(Isophthalsäure-, Terephthalsäure- und Resorcinestereinheit) Gewichtsverhältnis von weniger als 2,5 aufweist.

2. Polycarbonatzusammensetzung nach Anspruch 1, wobei die Zusammensetzung ein Cyclohexyliden-verbrücktes Bisphenol:(Isophthalsäure-, Terephthalsäure- und ResorcinesterEinheit) Gewichtsverhältnis von weniger als 2,25 aufweist.

3. Polycarbonatzusammensetzung nach Anspruch 1 oder 2, wobei die Zusammensetzung eine Trübung von weniger als 2,5, weniger als 2 oder weniger als 1,5 aufweist, bestimmt unter Verwendung einer 2,5 mm dicken Platte gemäß ASTM-D1003-00.

4. Polycarbonatzusammensetzung nach einem der Ansprüche 1 bis 3, wobei das Polycarbonat, das von dem substituierten oder unsubstituierten Cyclohexyliden-verbrückten Bisphenol abgeleitete Wiederholungseinheiten umfasst, in einer Menge von 5 bis 45 Gew.-%, bezogen auf das Gesamtgewicht der Zusammensetzung, vorliegt.

5. Polycarbonatzusammensetzung nach einem der Ansprüche 1 bis 4, wobei das Polycarbonat, das sich wiederholende Einheiten umfasst, die von einem substituierten oder unsubstituierten Cyclohexylidenverbrückten Bisphenol abgeleitet sind, umfasst:
eine erste sich wiederholende Carbonat-Einheit mit der Struktur 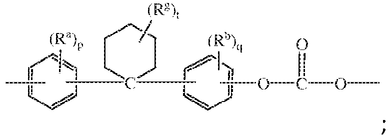 und
eine zweite sich wiederholende Carbonat-Einheit mit der Struktur 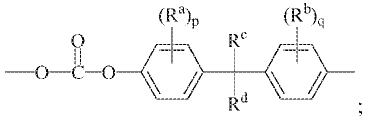
wobei in den vorgenannten Formeln
R^{a}, R^{b} und R^{g} jeweils unabhängig voneinander eine C₁₋₁₂-Alkylgruppe sind,
R^{c} und R^{d} jeweils unabhängig voneinander Wasserstoff, ein C₁₋₁₂-Alkyl, ein cyclisches C₁₋₁₂-Alkyl, ein C₇₋₁₂-Arylalkyl, ein C₁₋₁₂-Heteroalkyl oder ein cyclisches C₇₋₁₂-Heteroarylalkyl sind;
p und q jeweils unabhängig voneinander 0 bis 4 sind, und
t ist 0 bis 10.

6. Polycarbonatzusammensetzung nach einem der Ansprüche 1 bis 5, wobei das Polycarbonat, das sich wiederholende Einheiten umfasst, die von einem substituierten oder unsubstituierten cyclohexylidenverbrückten Bisphenol abgeleitet sind, die folgende Struktur aufweist 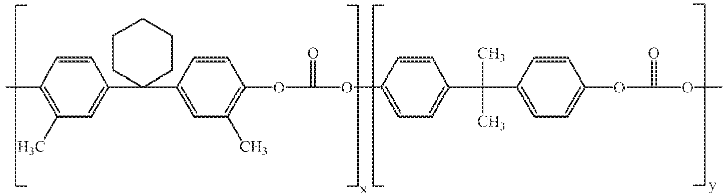 wobei das molare Verhältnis von x zu y 25:75 bis 75:25 beträgt.

7. Polycarbonatzusammensetzung nach einem der Ansprüche 1 bis 6, wobei das Polycarbonat, das sich wiederholende Einheiten umfasst, die von einem substituierten oder unsubstituierten cyclohexylidenverbrückten Bisphenol abgeleitet sind, einen Gehalt an substituiertem oder unsubstituiertem cyclohexylidenverbrücktem Bisphenol von 40 bis 60 Gew.-% aufweist, bezogen auf das Gesamtgewicht des Polycarbonats, das sich wiederholende Einheiten umfasst, die von einem substituierten oder unsubstituierten cyclohexylidenverbrückten Bisphenol abgeleitet sind.

8. Polycarbonatzusammensetzung nach einem der Ansprüche 1 bis 7, wobei das Polyestercarbonat die folgende Formel aufweist 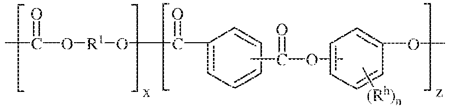 wobei
R¹ abgeleitet ist von einer aromatischen Dihydroxyverbindung der Formel 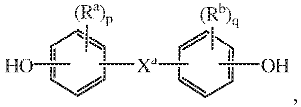
wobei R^{a} und R^{b} jeweils unabhängig ein Halogen, C₁₋₁₂-Alkoxy oder C₁₋₁₂-Alkyl sind, p und q jeweils unabhängig ganze Zahlen von 0 bis 4 sind und X^{a} eine Einfachbindung, -O-, -S-, -S(O))-, -S(O)₂-, -C(O)- oder eine organische C₁₋₆₀-Gruppe ist; und
R^{h} unabhängig bei jedem Auftreten ein Halogenatom, eine C₁₋₁₀-Alkylgruppe, eine halogensubstituierte C₁₋₁₀-Alkylgruppe, eine C₆₋₁₀-Arylgruppe oder eine halogensubstituierte C₆₋₁₀-Arylgruppe ist, und n 0 bis 4 ist.

9. Polycarbonatzusammensetzung nach einem der Ansprüche 1 bis 8, wobei die von Isophthalsäure, Terephthalsäure und Resorcin abgeleiteten Estereinheiten in dem Polyestercarbonat in einer Menge von 10 bis 30 Gew.-%, bezogen auf das Gesamtgewicht des Polyestercarbonats, vorhanden sind.

10. Polycarbonatzusammensetzung nach einem der Ansprüche 1 bis 9, umfassend, bezogen auf das Gesamtgewicht der Zusammensetzung:
10 bis 50 Gewichtsprozent des Bisphenol-A-Homopolycarbonats;
35 bis 55 Gewichtsprozent des Polyestercarbonats; und
5 bis 45 Gewichtsprozent des Polycarbonats, das sich wiederholende Einheiten umfasst, die von einem substituierten oder unsubstituierten cyclohexylidenverbrückten Bisphenol abgeleitet sind;
wobei die Zusammensetzung einen Gehalt an Cyclohexylidenverbrücktem Bisphenol von 22 Gewichtsprozent oder weniger aufweist; und
wobei das Cyclohexyliden-verbrückte Bisphenol:(Isophthalsäure-, Terephthalsäure- und ResorcinesterEinheit) Gewichtsverhältnis weniger als 2,25 beträgt.

11. Polycarbonatzusammensetzung nach einem der Ansprüche 1 bis 10, die ferner 0,1 bis 10 Gew.-%, bezogen auf das Gesamtgewicht der Polycarbonatzusammensetzung, einer Additivzusammensetzung enthält.

12. Polycarbonatzusammensetzung nach Anspruch 11, wobei die Additivzusammensetzung ein Flammschutzmittel, eine Farbstoffzusammensetzung, einen Stabilisator, ein Formtrennmittel oder eine Kombination davon umfasst.

13. Verfahren zur Herstellung der Polycarbonatzusammensetzung nach einem der Ansprüche 1 bis 12, wobei das Verfahren das Schmelzmischen der Komponenten der Zusammensetzung und gegebenenfalls das Extrudieren der Zusammensetzung umfasst.

14. Gegenstand, umfassend die Polycarbonatzusammensetzung nach einem der Ansprüche 1 bis 12.

## Revendications

1. Composition de polycarbonate comprenant :
10 à 60 % en poids, par rapport au poids total de la composition, d'un homopolycarbonate de bisphénol A ;
un polycarbonate comprenant des motifs répétitifs dérivés d'un bisphénol à pont cyclohexylidène substitué ou non substitué en une quantité efficace pour fournir une teneur en bisphénol à pont cyclohexylidène substitué ou non substitué de 25 % en poids ou moins, par rapport au poids total de la composition ; et
un polyester-carbonate comprenant des motifs esters dérivés d'acide isophtalique, d'acide téréphtalique, et de résorcinol ;
dans laquelle la composition a un rapport en poids bisphénol à pont cyclohexylidène / (motifs esters d'acide isophtalique, d'acide téréphtalique et de résorcinol) inférieur à 2,5.

2. Composition de polycarbonate selon la revendication 1, dans laquelle la composition a un rapport en poids bisphénol à pont cyclohexylidène / (motifs esters d'acide isophtalique, d'acide téréphtalique et de résorcinol) inférieur à 2,25.

3. Composition de polycarbonate selon la revendication 1 ou 2, dans laquelle la composition présente un voile inférieur à 2,5, ou inférieur à 2, ou inférieur à 1,5, tel que déterminé par utilisation d'une plaque ayant une épaisseur de 2,5 mm conformément à la norme ASTM-D1003-00.

4. Composition de polycarbonate selon l'une quelconque des revendications 1 à 3, dans laquelle le polycarbonate comprenant des motifs répétitifs dérivés d'un bisphénol à pont cyclohexylidène substitué ou non substitué est présent en une quantité de 5 à 45 % en poids par rapport au poids total de la composition.

5. Composition de polycarbonate selon l'une quelconque des revendications 1 à 4, dans laquelle le polycarbonate comprenant des motifs répétitifs dérivés d'un bisphénol à pont cyclohexylidène substitué ou non substitué comprend
un premier motif répétitif carbonate de structure 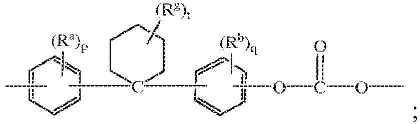 et
un deuxième motif répétitif carbonate de structure 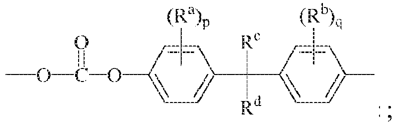
dans laquelle, dans les formules ci-dessus,
chacun de R^{a}, R^{b} et R^{g} est indépendamment un groupe alkyle en C₁ à C₁₂,
chacun de R^{c} et R^{d} est indépendamment un hydrogène, un alkyle en C₁ à C₁₂, un cycloalkyle en C₁ à C₁₂, un arylalkyle en C₇ à C₁₂, un hétéroalkyle en C₁ à C₁₂, ou un cyclohétéroarylalkyle en C₇ à C₁₂,
chacun de p et q vaut indépendamment de 0 à 4, et
t vaut de 0 à 10.

6. Composition de polycarbonate selon l'une quelconque des revendications 1 à 5, dans laquelle le polycarbonate comprenant des motifs répétitifs dérivés d'un bisphénol à pont cyclohexylidène substitué ou non substitué est de structure 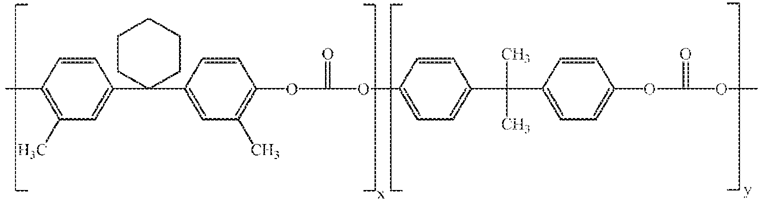 dans laquelle le rapport molaire de x à y est de 25/75 à 75/25.

7. Composition de polycarbonate selon l'une quelconque des revendications 1 à 6, dans laquelle le polycarbonate comprenant des motifs répétitifs dérivés d'un bisphénol à pont cyclohexylidène substitué ou non substitué a une teneur en bisphénol à pont cyclohexylidène substitué ou non substitué de 40 à 60 % en poids, par rapport au poids total du polycarbonate comprenant des motifs répétitifs dérivés d'un bisphénol à pont cyclohexylidène substitué ou non substitué.

8. Composition de polycarbonate selon l'une quelconque des revendications 1 à 7, dans laquelle le polyester-carbonate est de formule 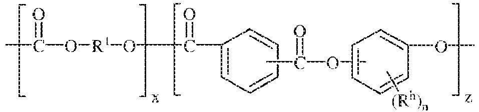 dans laquelle
R¹ dérive d'un composé dihydroxy aromatique de formule 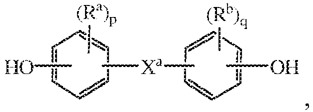
dans laquelle chacun de R^{a} et R^{b} est indépendamment un halogène, un alcoxy en C₁ à C₁₂, ou un alkyle en C₁ à C₁₂, chacun de p et q est indépendamment un entier de 0 à 4, et X^{a} est une liaison simple, -O-, -S-, -S(O)-, -S(O)₂-, -C(O)-, ou un groupe organique en C₁ à C₆₀ ; et
R^{h} est indépendamment à chaque occurrence un atome d'halogène, un groupe alkyle en C₁ à C₁₀, un groupe halogénoalkyle en C₁ à C₁₀, un groupe aryle en C₆ à C₁₀, ou un groupe halogénoaryle en C₆ à C₁₀, et n vaut de 0 à 4.

9. Composition de polycarbonate selon l'une quelconque des revendications 1 à 8, dans laquelle les motifs esters dérivés d'acide isophtalique, d'acide téréphtalique et de résorcinol sont présents dans le polyester-carbonate en une quantité de 10 à 30 % en poids par rapport au poids total du polyester-carbonate.

10. Composition de polycarbonate selon l'une quelconque des revendications 1 à 9, comprenant, par rapport au poids total de la composition :
10 à 50 % en poids de l'homopolycarbonate de bisphénol A ;
35 à 55 % en poids du polyester-carbonate ; et
5 à 45 % en poids du polycarbonate comprenant des motifs répétitifs dérivés d'un bisphénol à pont cyclohexylidène substitué ou non substitué ;
dans laquelle la composition a une teneur en bisphénol à pont cyclohexylidène de 22 % en poids ou moins ; et
dans laquelle le rapport en poids bisphénol à pont cyclohexylidène / (motifs esters d'acide isophtalique, d'acide téréphtalique et de résorcinol) est inférieur à 2,25.

11. Composition de polycarbonate selon l'une quelconque des revendications 1 à 10, comprenant en outre 0,1 à 10 % en poids, par rapport au poids total de la composition de polycarbonate, d'une composition d'additifs.

12. Composition de polycarbonate selon la revendication 11, dans laquelle la composition d'additifs comprend un agent ignifugeant, une composition colorante, un stabilisant, un agent de démoulage, ou une combinaison de ceux-ci.

13. Méthode pour préparer la composition de polycarbonate selon l'une quelconque des revendications 1 à 12, la méthode comprenant le mélange à l'état fondu des composants de la composition, et éventuellement l'extrusion de la composition.

14. Article comprenant la composition de polycarbonate selon l'une quelconque des revendications 1 à 12.
